(19) Europäisches Patentamt
European Patent Office
Office européen des brevets

(11) EP 1 254 192 B1

(12) **EUROPEAN PATENT SPECIFICATION**

(45) Date of publication and mention of the grant of the patent:
**04.08.2004 Bulletin 2004/32**

(21) Application number: **01905648.0**

(22) Date of filing: **04.01.2001**

(51) Int Cl.[7]: **C08K 5/00**, C08L 83/04

(86) International application number:
**PCT/EP2001/000070**

(87) International publication number:
**WO 2001/049789 (12.07.2001 Gazette 2001/28)**

# (54) ORGANOSILOXANE COMPOSITIONS

ORGANOSILOXAN-ZUSAMMENSETZUNGEN

COMPOSITIONS A BASE D'ORGANOSILOXANE

(84) Designated Contracting States:
**AT BE CH CY DE DK ES FI FR GB GR IE IT LI LU MC NL PT SE TR**

(30) Priority:
**06.01.2000 JP 2000005783**
**24.02.2000 JP 2000048125**
**20.04.2000 JP 2000126265**
**20.04.2000 JP 2000126266**
**20.04.2000 JP 2000126268**
**20.04.2000 GB 0009684**

(43) Date of publication of application:
**06.11.2002 Bulletin 2002/45**

(73) Proprietors:
- **DOW CORNING S.A.**
  **B-7180 Seneffe (BE)**
- **Dow Corning Asia, Ltd.**
  **Tokyo 100-0005 (JP)**
- **Dow Corning Toray Silicone Company, Ltd.**
  **Tokyo 100-0005 (JP)**

(72) Inventors:
- **TACHIKAWA, Mamoru**
  **Isehara-shi, Kanagawa Prefecture (JP)**
- **SARUYAMA, Toshio**
  **Sakura-shi, Chiba Prefecture (JP)**
- **OKABE, Kazutoshi**
  **Ichihara-shi, Chiba Prefecture (JP)**
- **ADACHI, Hiroshi**
  **Ichihara-shi, Chiba Prefecture (JP)**
- **DE BUYL, François**
  **B-1180 Bruxelles (BE)**
- **SPRINGAEL, Sabine**
  **B-7110 La Louviere (BE)**
- **ZHANG, Luo, Cheng**
  **Hadano-shi, Kanagawa-ken 257-0031 (JP)**

(74) Representative: **Donlan, Andrew Michael**
**Dow Corning Limited,**
**Intellectual Property Department,**
**Cardiff Road**
**Barry CF63 2YL (GB)**

(56) References cited:
**EP-A- 0 354 267**
**EP-A- 0 361 803**
**EP-A- 0 802 222**
**US-A- 4 683 251**
**US-A- 5 264 603**

- **DATABASE WPI Derwent Publications Ltd., London, GB; AN 1993-411045 XP002167770 & JP 05 311077 A (KANSAI), 22 November 1993 (1993-11-22)**
- **DATABASE WPI Derwent Publications Ltd., London, GB; AN 1992-170508 XP002167771 & JP 04 103668 A (KANSAI), 6 April 1992 (1992-04-06)**

EP 1 254 192 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

This invention is concerned with moisture curable organosiloxane compositions which are curable to elastomeric solids and also relates to the use of such compositions as sealing materials.

Organosiloxane compositions which cure to elastomeric solids are well known. Typically such compositions are obtained by mixing a polydiorganosiloxane having reactive terminal groups, generally silanol groups, with a silane cross-linking agent reactive with the polydiorganosiloxane, for example an acetoxysilane, an oximesilane, an aminosilane or an alkoxysilane. These materials are frequently curable upon exposure to atmospheric moisture at room temperature.

One important application of the above-described curable compositions is their use as sealants. In use as sealants, it is important that the composition is capable of curing in comparatively thick layers to provide an elastomeric body having a thickness greater than about 2 mm. It is frequently desirable that the composition cures quickly enough to provide a sound seal within several hours but not so quickly that the surface cannot be tooled to desired configuration shortly after application. Among specifically desirable attributes for such compositions are fast surface cure rate, good elasticity of the skin formed and lack of surface tackiness after curing for about 24 hours. Also, it has long been desired to have a clear, translucent or "water white" product which retains its translucency and lack of colour during use.

In order to achieve the desired speed of cure of alkoxysilane cured silicone compositions it has become a practice to employ certain organic titanium compounds as catalysts for the condensation reaction. Some of these titanium compounds are apt to react with methoxysilane to form a white precipitate and this gives a discolouration and restricts the ability of the composition to cure. The titanium compounds most generally preferred for this purpose are those derived from primary or secondary alcohols, for example, isopropyl alcohol and n-butyl alcohol. However, the titanium compounds employed in practice are often inadequate to promote a sufficiently rapid and/or deep cure and it is a practice to employ a chelating agent for example an acetyl acetonate as an accelerator and stabilizer for the titanium compound, which accelerators generally cause a yellow discoloration. Examples of such accelerators are described in the following prior art.

US3334067 describes a method of preparing a one package room temperature silicone rubber by mixing an hydroxylated siloxane polymer with a silane cross-linking agent and a beta-dicarbonyl titanium compound such as bis (acetylacetonyl)diisopropyl titanate. EP0164470 describes an organopolysiloxane fluid containing at least two alkoxysilyl organic radicals and titanium, zirconium, hafnium metal or vanadium oxide esters soluble in the liquid. EP0361803 describes a method for the in situ formation of titanium chelate catalysts in which a silicone sealant is prepared by adding an alkoxy or hydroxy endblocked polydiorganosiloxane, an alkoxy functional cross-linker and a titanate catalyst. In this case the titanate catalyst is a tetraorgano titanate such as tetra isopropoxy titanate and tetra butoxy titanate to which ethylacetoacetate is added. EP 0354267 describes an organopolysiloxane comprising an hydroxyl or alkoxy terminated organopolysiloxane an alkoxysilane cross-linker, a titanium catalyst and a basic compound containing nitrogen. One of the catalysts used was a titanium di-isopropoxy bis(ethylacetoacetate). US4438039 describes a titanium chelate catalyst which does not form nodules upon storage and comprises the reaction product of a two stage reaction system. The first reaction was between Ti $[OR]_4$ and the following two ketones

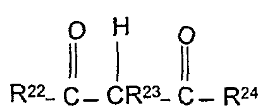

and

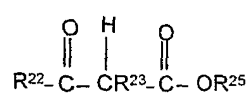

where $R^{22}$ is said to be halogen substituted or unsubstituted monovalent hydrocarbon radicals, $R^{23}$ is hydrogen, hydrocarbyl, halohydrocarbyl or acyl $R^{24}$ is a radical having not more than eight carbon atoms consisting of hydrocarbyl, halohydrocarbyl, cyanoalkyl or amino groups and $R^{25}$ is a hydrocarbon radical, amino, ether or a polyether. No examples of halogen substituted hydrocarbon radicals are provided. The resulting products are then reacted with a diol $HO\text{-}R^{26}\text{-}OH$ where $R^{26}$ is an alkylene group having 2 to 20 carbon atoms to form the final catalyst. The examples and claims teach that $R^{23}$ is Hydrogen, $R^{22}$ and $R^{29}$ are methyl groups and $R^{25}$ is an ethyl group.

In EP0802222 there is described a method of improving the adhesion of a room temperature vulcanisable silicone composition comprising a polydiorganosiloxane having at least two alkoxy end groups, a cross linker, filler and a titanium catalyst, for example tetraalkoxy titanates such as tetraethoxy titanate and tetra isopropoxy titanate or chelated titanium compounds such as bis-acetylacetonyldiisopropoxy titanate, with 0.25 to 3 moles of monoketoester per mole of each titanium atom in the catalyst.

EP0747443, teaches the use of a catalyst according to the general formula $M[OR]_x[OR']_y$ where M represents a metal having a valency of 4 selected from Group IVB of the Periodic Table, *x* has a value from 0 to 0.60, *y* has a

value from 3.40 to 4.0 and ($x + y$) = 4, and R' represents a monovalent, tertiary or branched secondary aliphatic hydrocarbon group and R represents a monovalent linear aliphatic hydrocarbon group having 1 to 6 carbon atoms. The catalyst was preferably tetra (tertiary butoxy) titanate or tetra (tertiary amyloxy) titanate. Such a catalyst used for the preparation of silicone sealants was said to cause fast curing compositions, which do not yellow, without the need for a chelating agent.

The introduction of EP0747443, filed in June 1996, teaches that whilst an acetylacetonate may be mixed and/or reacted with the titanium compound to provide a complex as described in the prior art above, use of these resulting complexes as catalysts for curing silicone products inevitably results in a cured silicone product which has a yellow tint or discoloration.

The technology discussed above is particularly relevant to the preparation of room temperature cure sealants. When compared to well known room temperature vulcanisation oxime cure sealants, typical alkoxysilane cured sealant still have two significant problems, (1) a slower surface cure rate, and (2) a feeling of a residual surface tackiness after the period of time the surface is measured as "tack-free" using the standard Tack-Free-Time (TFT) test method (CTM 095A). Furthermore, possibly as a consequence of the overall mechanism of cure of the system (i.e. diffusion of moisture from the ambient atmosphere into the deep section of a sealant bead), the adhesion to some important substrates like floated glass panes does not build-up perfectly all along a sealant-substrate bond line. This phenomenon may suggest that the adhesive strength of the sealant to the glass is not strong enough for the glazing application envisaged. In the case of a glass or mill finished aluminium substrate, it has been found that with alkoxysilane cured sealants, after a period of 7 days curing the sealant is adhered to the substrate around the edges of a bead of sealant but no significant adhesion can be detected at the interface between the substrate and the centre of the bead. This phenomenon, which is a significant problem with respect to adhesion of, in particular, the above two substrates is generally termed as channel adhesion.

End users are known to consider that a sealant with a residual surface tackiness has several drawbacks, for example, it may be thought that the product will not cure completely and thereby, may lead to the, typically incorrect, belief that such a problem also causes poor bulk properties. Tacky surfaces are more prone to dirt pick up in a dusty environment such as in a factory.

Furthermore, whilst a solution to the problem of yellowing has been sought for many years and has been solved partially by EP0747443, it is still not known how to achieve the characteristics of desired speed of cure and adhesion build-up, particularly on glass and metals together with non yellowing with the titanium based catalyst systems.

The present invention seeks to provide an improved sealant based on alkoxy-functional curative/Group IV B metal ester catalyst by providing both an improved surface cure rate performance and the early adhesive bonding performance of the sealant on glass and typical metals like aluminium, copper and brass as used in the construction industry. It has also been found that contrary to the teaching of EP0747443 the addition of certain chelating agents to catalysts such as those described in EP0747443, results in alkoxysilane-cure silicone compositions which are curable at room temperature in the presence of atmospheric moisture at a desired rate and to a desired thickness and provide a translucent, "water white" cured products without the aesthetically unpleasant yellowing discoloration issue.

The present invention provides in a first aspect a moisture curable composition capable of cure to an elastomeric body, the composition comprising

a) a polymeric material having not less than two hydroxyl or hydrolysable groups
b) an alkoxysilane curative and
c) a mixture and/or reaction product of a compound (i) selected from $M[OR]_4$ and $M[OR']_x [Z]_z$

wherein
M represents a metal having a valency of 4 selected from Group IVB of the Periodic Table, each R and R' is the same or different and is selected from a primary, secondary or tertiary aliphatic hydrocarbon and $SiR^9_3$, where each $R^9$ is an alkyl group having 1 to 6 carbon atoms and
Z is a group of the formula -O-Y-O- wherein Y is an alkylene group comprising 1 to 8 carbon atoms or a branched alkylene radical comprising 1 to 8 carbon atoms and x is 0 or 2 in which case when x is 0, z is 2 and when x is 2, z is 1; and a compound ii) of the general formula

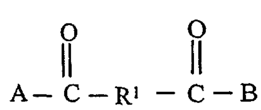

wherein $R^1$ is selected from a methylene group or a substituted methylene group having 1 to 6 carbon atoms,
A is selected from $-(CX_2)_nC(R^2)_3$ wherein n is from 0 to 5, and an adamantyl group or a derivative thereof;
B is selected from the group of
$-(CX_2)_tC(R^2)$ wherein t is from 0 to 5;
a monovalent alkyl group having from 1 to 6 carbon atoms and; $OR^3$, wherein $R^3$ is selected from the group of $-(CX_2)_tC(R^2)_3$ and a monovalent alkyl group having from 1 to 6 carbon atoms;
wherein each X is the same or different and is selected from the group of a halogen radical and hydrogen, each $R^2$ is the same or different and- is selected from the group of a halogen radical and an alkyl radical having one to eight carbon atoms, and when n is greater than 0 at least one of X or $R^2$ is a halogen radical.

It is to be understood that the concept "comprising" where used herein is used in its widest sense to mean and to encompass the notions of "include", "comprehend" and "consist of".

Regarding compound (i), for the avoidance of doubt the Group IVB elements of the Periodic Table in accordance with this invention are titanium (Ti), Zirconium (Zr) and Hafnium (Hf). Whilst M may represent any of the Group IVB elements, the preferred elements are titanium and zirconium. Each R and R' group may be any primary alkyl group having 1 to 6 carbon atoms for example, methyl, ethyl, butyl, propyl, pentyl or hexyl groups, a secondary alkyl such as isopropyl, or tertiary alkyl groups such as tertiary butyl ($C(CH_3)_3$) or tertiary amyl ($C(C_2H_5)(CH_3)_2$) . Alternatively R may be $SiR^9_3$, where each $R^9$ is an alkyl group having 1 to 6 carbon atoms such as methyl, ethyl, isopropyl, n butyl, tertiary butyl. In one preferred embodiment at least a majority and most preferably at least 75% of R or R' groups are tertiary alkyl groups. One example of an appropriate compound (i) is sold as Tyzor 9000 by Dupont and has the formula Ti $[isopropoxy]_{az}[tertiary\ butoxy]_{bz}$ where a is about 10% and b is about 90% and the total number of [isopropoxy] + [tertiary butoxy] groups per Ti atom is 4. The preparation of compounds of the above type is discussed in EP0747443.

When Z is -O-Y-O- each oxygen atom is bound directly to the Metal atom and x is about 2. Preferably Y is an alkylene group containing 1 to 8 carbon atoms. Examples of the O-Y-O group may include 1,3-dioxypropane ($O-(CH_2)_3-O$), 2,4-dimethyl-2,4-dioxypentane ($O-C((CH_3)_2)-CH_2-C((CH_3)_2)-O$) and 2,3-dimethyl-2,3-dioxybutane ($O-C((CH_3)_2)-C-((CH_3)_2)-O$)

Regarding now compound (ii), preferably at least one and most preferably each X is a halogen radical. Most preferably the halogen radical is a fluorine radical. Similarly it is preferred that at least one and most preferably each $R^2$ group is a halogen radical and most preferably it is a fluorine radical or each $R^2$ group is an alkyl group, most preferably a methyl or ethyl or butyl group. In a most preferred formulation n is zero. $R^1$ is most preferably a methylene group but can have one alkyl or halogen substituted alkyl group with 1 to 5 carbon atoms. The adamantyl group is a derivative of adamantane or tricyclo-3,3,1,1-decane which is a rigid ring system based on three fused cyclohexane rings.

Preferably B is $OR^3$ where $R^3$ is a monovalent alkyl group having from 1 to 6 carbon atoms, most preferably $R^3$ is a methyl, ethyl or isopropyl group. When B contains $-(CX_2)_tC(R^2)_3$, t is preferably 1 or 0, most preferably 0.

Examples of compound (ii) include Methyl pivaloylacetate (MPA), otherwise known as Pentanoic acid, 4,4-dimethyl-3-oxo-, methyl ester wherein each $R^2$ is a methyl group, n is zero, $R^1$ is a methylene group and B is $OR^3$ where $R^3$ is a methyl group. MPA has the following formula:-

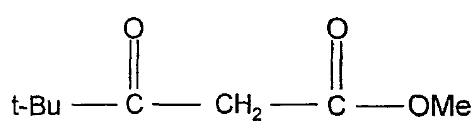

Ethyl 4,4,4-trifluoroacetoacetate (TFA), otherwise known as Butanoic acid, 4,4,4-trifluoro-3-oxo-, ethyl ester and ethyltrifluoromethylacetoacetate wherein each $R^2$ is a fluoro group, n is zero, $R^1$ is a methylene group and B is $OR^3$ where $R^3$ is a ethyl group. TFA has the following formula:-

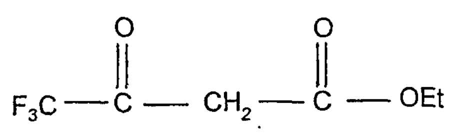

Pentanoic acid 5,5,5,4,4-pentafluoro-3-oxoethyl ester, hereafter referred to as ethylpentafluoroethylacetoacetate has

the formula $C_2F_5$-C (=O) -$CH_2$-C (=O) -O-$C_ZH_5$
Dipivaloylmethane has the formula $(CH_3)_3CC(=O)CH_2C(=O)\ C(CH_3)_3$
Methyl-3-oxo-4,4-dimethylhexanoate has the formula

$$C_2H_5\text{-}C((CH_3)_2)\text{-}C(=O)\text{-}CH_2\text{-}C(=O)\text{-}O\text{-}CH_3$$

and ethyl-3-(1-adamantyl)-3-oxopropionate where A is an adamantyl group, $R^1$ is a methylene group and B is $OR^3$ where $R^3$ is an ethyl group.

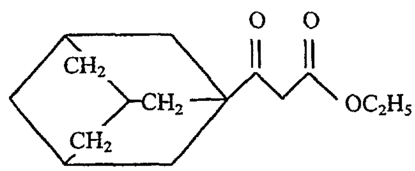

It is to be noted that the structures of compound (ii) are tautomeric and therefore the above structures are general and are in real terms a combination of tautomers

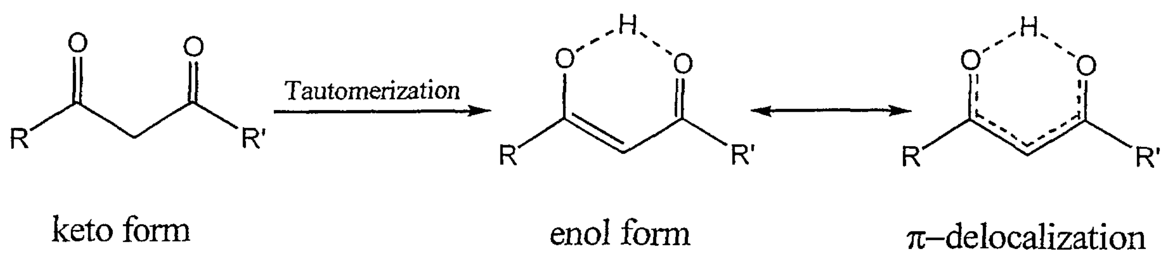


and it is this tautomerism which enables compound (ii) to become a chelate of M when mixed/reacted with compound (a) wherein tautomers of compound (ii) may replace any OR or OR'.

It has been found that the addition of ethylacetoacetate (EAA) to a titanium alkoxide generally causes a strong yellow discoloration upon ageing, however, the addition of compounds in accordance with compound (ii) above substantially removes this problem. It is suggested that such a difference may be as a result of the keto-enol equilibrium of such compounds. For example the ratio of the β-enol and β-diketo forms of EAA, MPA and TFA were determined by 1H NMR spectroscopy in deuterated benzene and are shown in the following Table.

| Compound | enol / diketo form ratio |
|---|---|
| EAA | 10 / 90 |
| MPA | 19 / 81 |
| TFA | 87 / 13 |

It would seem that the higher the degree of the enol form, the stronger the complexing strength of compound (ii) with compound (i). This in turn may provide a more stable chelated titanium ester species (titanate) and it would appear that the stability of the keto-enol form is a major factor in the discoloration (or not as the case may be) of resulting silicone sealant compositions.

Hence, preferred reaction products in accordance with this first aspect of the invention may be depicted as follows:-

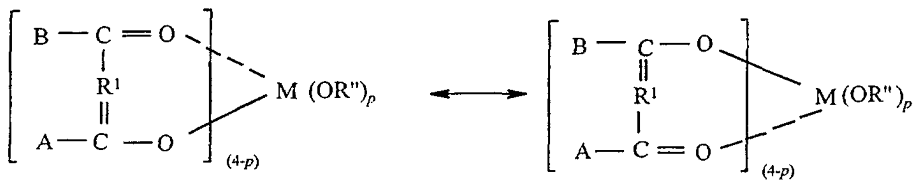

However it is to be understood that in most instances there will be present a mixture and/or reaction product of all different connotations of compounds (i) and (ii) including unreacted (i) and (ii) and the above from where p is 0 to p is 4.

Similarly when Z is -O-Y-O- the reaction is preferably of the following tautomeric structure but typically will be a mixture and/or reaction product comprising all possible alternatives including unreacted compounds (i) and (ii)

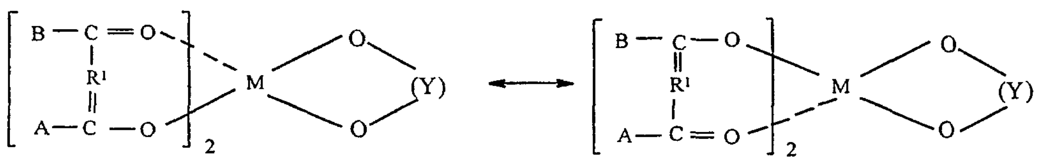

The molar ratio of compound (ii) to compound (i) is preferably no greater than 4 : 1, more preferably the ratio is between about 0.5 : 1 and 2 : 1, but most preferably it is in the region of 1 :1.

Examples of the main components of the reaction product/mixture may include:-
di-tert-butoxytitanium bis(ethyl-3-oxo-4,4-dimethylhexanoate),
diisopropoxytitanium bis(methyl-3-oxo-4,4-dimethylhexanoate),
2,3-dimethyl-2,3-dioxybutanetitanium bis(methyl pivaloylacetate),
2-methyl-2,4-dioxypentanetitanium bis(methyl pivaloylacetate),
1,3-dioxypropanetitanium bis(methyl pivaloylacetate),
1,2-dioxyethanetitanium bis(methyl-3-oxo-4,4-dimethylhexanoate),
2,3-dimethyl-2,3-dioxybutanetitanium bis(methyl-3-oxo-4,4-dimethylhexanoate),
2-methyl-2,4-dioxypentanetitanium bis(methyl-3-oxo-4,4-dimethylhexanoate),
diisopropoxytitanium bis(ethyltrifluoromethylacetoacetate), di-tert-butoxytitanium bis(ethyltrifluoromethylacetoacetate),
di-tert-butoxytitanium bis (methylpentafluoroethylacetoacetate),
diethoxytitanium bis(ethylpentafluoroethylacetoacetate),
2,3-dimethyl-2,3-dioxybutanetitanium bis(ethyltrifluoromethylacetoacetate),
2-methyl-2,4-dioxypentanetitanium bis(ethyltrifluoromethylacetoacetate),
1,3-dioxypropanetitanium bis(methylpentafluoroethylacetoacetate),
1,2-dioxyethanetitanium bis(ethylpentafluoroethylacetoaceate),
1,2-dioxyethanetitanium bis(methyltrifluoromethylacetoaceate),
1,3-dioxypropanetitanium bis(isopropyltrifluoromethylacetoaceate),
2-methyl-2,4-dioxypentanetitanium bis(ethylpentafluoroethylacetoacetate),
diisopropoxyzirconium bis(methylpivaloylacetate),
di(2-ethylhexoxy)zirconium bis(methylpivaloyloacetate),
di(n-butoxy) zirconium bis(methylpivaloyloacetate),
di(n-propoxy)zirconium bis(methylpivaloyloacetate),

di(n-butoxy)zirconium bis(methyl-3-oxo-4,4-dimethylhexanoate),
di(n-propoxy)zirconium bis(methyl-3-oxo-4,4-dimethylhexanoate),
diisopropoxyzirconium bis(ethyltrifluoromethylacetoacetate),
di-n-butoxyzirconium bis(ethyltrifluoromethylacetoacetate),
di-n-propoxyzirconium bis(ethyltrifluoromethylacetoacetate),
di-tertiary-butoxyzirconium bis(ethylpentafluoroethyl acetoacetate),
diisopropoxyzirconium bis(ethylpentafluoroethyl acetoacetate),
di-n-butoxyzirconium bis(ethylpentafluoroethylacetoacetate),
1,2-dioxyethanezirconium bis(methylpivaloyloacetate),
1,3-dioxypropanezirconium bis(methylpivaloyloacetate),
2,4-dimethyl-2,4-dioxypentanezirconium bis(ethylpivaloyloacetate),
2,3-dimethyl-2,3-dioxybutanezirconium bis(ethylpivaloyloacetate),
1,2-dioxyethanezirconium bis(ethyltrifluoromethyl acetoacetate),
1,3-dioxypropanezirconium bis(ethyltrifluoromethyl acetoacetate),
2,3-dimethyl-2,3-dioxybutanezirconium bis(ethyltrifluoromethyl acetoacetate),
2-methyl-2,4-dioxypentanezirconium bis(ethylpentafluoroethyl acetoacetate),
2-methyl-2,4-dioxypentanezirconium bis(ethyltrifluoromethyl acetoacetate),
di-tert-amyloxyzirconium bis(methylpivaloyloacetate),
di-tert-butoxyzirconium bis(ethyltrifluoromethylacetoacetate),
di-tert-amyloxyzirconium bis(ethyltrifluoromethylacetoacetate),
di-tert-amyloxyzirconium bis(ethylpentafluoroethylacetoacetate),
diisopropoxyzirconium bis(methylpivaloylacetate),
di(2-ethylhexoxy)zirconium bis(methylpivaloyloacetate) and
di(n-butoxy)zirconium bis(methylpivaloyloacetate).

In a composition according to the first aspect of the invention the polymeric material may be a polydiorganosiloxane a polyoxyalkylene, a polyacrylic, a polyisobutylene or a polyethylene or a mixture thereof. Preferably the polymeric material comprises not less than two groups bonded to silicon which are hydroxyl or hydrolysable groups. The polymer may be of the general formula W-Q-W where Q may be any desired organic material such as those mentioned above or a siloxane molecular chain for example a polyoxyalkylene chain or more preferably a polydiorganosiloxane chain and thus preferably includes siloxane units $R''_sSiO_{4-s/2}$ in which R" represents an alkyl group having from 1 to 6 carbon atoms, a vinyl group or a phenyl group, or fluorinated alkyl group and s has a value of 0, 1 or 2. Preferred materials are linear materials i.e. s = 2 for all units. Preferred materials have polydiorganosiloxane chains according to the general formula $-(R''_2SiO)_m-$ in which each R" represents an alkyl group, for example a methyl, ethyl or isobutyl group and m has a value from about 200 to about 1500. Suitable materials have viscosities of the order of about 500 mPa.s to about 200,000 mPa.s. The groups W of the polymeric material are hydroxyl or hydrolysable groups and may be the same or different.

The W groups may be selected, for example, from $-Si(R'')_2OH$, or

$$-Si(R'')_2-(D)_d-R'''SiR''_k(OR^5)_{3-k}$$

where D is $-R'''-(Si(R'')_2-O)_r-Si(R'')_2-$ and
R" is as aforesaid, (and is preferably methyl), R"' is a divalent hydrocarbon group r is a whole number between 1 and 6 and d is 0 or a whole number, $R^5$ is an alkyl or oxyalkyl group in which the alkyl groups have up to 6 carbon atoms and k has the value 0, 1 or 2. Preferably, R"' is either a methylene or ethylene group k is 0 or 1 and $R^5$ is a methyl or ethyl group. Most preferably R"' is an ethylene group k is 0 and $R^5$ is an ethyl group. Preferably at least one W group is a $-Si(R'')_2-(D)_d-R'''-SiR''_k(OR^5)_{3-k}$ group. A small proportion of W groups may be $(alkyl)_3Si-$ groups (where the alkyl groups are preferably methyl groups).

In a composition according to the invention the or each alkoxysilane curative is of the general formula $R''_{4-q}Si(OR^5)_q$ wherein R" and $R^5$ are as aforesaid and q has a value of 2, 3 or 4. Preferred silanes are those wherein R" represents methyl, ethyl or vinyl or isobutyl, $R^5$ represents methyl or ethyl and q is 3. Examples of operative silanes are methyltri(methoxy)silane (MTM) , vinyltrimethoxysilane, methyltriethoxysilane; and vinyltriethoxysilane, isobutyltrimethoxysilane (iBTM). Other suitable silanes include ethyltrimethoxysilane, vinyltriethoxysilane, phenyltrimethoxysilane, and other such trifunctional alkoxysilanes as well as partial hydrolytic condensation products thereof. A sufficient amount of the chosen alkoxysilane curative(s) is/are employed to ensure adequate stability of the composition during storage and adequate crosslinking of the composition when exposed to atmospheric moisture.

Preferably the composition comprises 100 parts by weight of polymeric material, 0.1 to 20 parts by weight of alkoxysilane curative and 0.1 to 10 parts by weight of catalyst in the form of the mixture and/or reaction product defined

above.

Compositions of this invention may contain as optional constituents other ingredients which are conventional to the formulation of silicone rubber sealants and the like. For example, the compositions will normally contain one or more finely divided, reinforcing or extending fillers such as high surface area fumed and precipitated silicas, crushed quartz, diatomaceous earths, calcium carbonate, barium sulphate, iron oxide, titanium dioxide and carbon black. The proportion of such fillers employed will depend on the properties desired in the elastomer-forming composition and the cured elastomer. Usually the filler content of the composition will reside within the range from about 5 to about 150 parts by weight per 100 parts by weight of the polymeric material.

Other ingredients which may be included in the compositions are pigments, plasticisers, agents (usually organosilicon compounds) for treating fillers, rheological additives for improving toolability of the composition, such as silicone glycols and adhesion improving substances, for example, γ-aminopropyltriethoxysilane alone or in combination with γ-glycidoxypropyltrimethoxysilane. One conventional ingredient which can be employed as a plasticiser to reduce the modulus of the cured elastomer is a polydimethyl siloxane having terminal triorganosiloxy groups wherein the organic substituents are e.g. methyl, vinyl or phenyl or combinations thereof. Such polydimethylsiloxanes normally have a viscosity of from about 100 to about 100,000 mPa.s at 25°C and can be employed in amounts up to about 80 parts per 100 parts by weight of the polymeric material. Alternative plasticisers may include organic plasticisers which will be well known to the person skilled in the art such as petroleum distillates.

A further additive which may be introduced into the system preferably at the same time as compound (ii) is (tertiary amyl) alcohol, this is particularly the case where compound (i) comprises tertiary butyl or particularly isopropoxy groups as the isopropoxy groups are readily labile on hydrolysis and alcoholysis and are rapidly exchanged with the (tertiary amyloxy) groups. Hence, for example when compound (i) is 2 % by weight of Tyzor 9000, compound (ii) might be 0.1 to 1.0 % by weight of TFA which could be added simultaneously with 0.2 to 0.5 % by weight of (tertiary amyl) alcohol.

Also included within the scope of this invention are the cured elastomeric products of the said compositions and the use of such compositions for sealing joints, cavities and the like.

It has also been found that sealant compositions in accordance with the present invention avoid the problem of channel adhesion on glass and other substrates in particular mill finished aluminium, which substrates are particularly relevent to the glazing industry. It has been found that such channel adhesion problems are avoided by utilising a mixture/and/or reaction product in accordance with the current invention as a catalyst. It is thought that this may be because the mechanism of channel formation could be linked to the reactivity and fate of the titanate or the like catalyst (henceforth referred to as the titanate catalyst) in the sealant joint. For example the titanate could react rapidly with the surface to form glass-O-Ti bonds, these bonds gradually changing to glass-O-Si bonds. This supposition would indicate that a chelated titanate catalyst (i.e. compound (i) + compound (ii) herein) would have different adhesion properties to non-chelated titanate catalysts as the availability of the titanium atom would vary.

Additional additives which could be added to the composition of the present invention to reduce the effect of channel adhesion include acetoxysilanes such as for example di terbutoxodiacetoxysilane and ethyltriacetoxysilane, although it has been found that in the absence of a catalyst in accordance with the present invention such additives can cause a progressive yellow discoloration to the cured sealant. Other possible additives include an aliphatic diol having 1 to 6 carbon atoms such as 1,4-butane diol and low viscosity (35-45 centistokes) hydroxy terminated polydimethylsiloxane. Additives as described above may be added in an amount of up to about 5% by weight of the composition. The preferred amount of additive added is between 0.5 and 2.5% by weight most preferred between 0.75 and 2% by weight.

In a second aspect of the invention there is provided a catalyst composition for catalyzing a reaction between a polymeric material having not less than two hydroxyl or hydrolysable groups and an alkoxysilane curative said catalyst comprising the mixture/reaction product of claim 1 and an alkoxysilane or a tertiary amyl alcohol. The alkoxysilane may be as defined above for use as an alkoxysilane curative but is most preferably methyltrimethoxysilane. Typically the alkoxysilane of the catalyst is determined as a proportion of the total amount of alkoxysilane curative used in the moisture curable composition. However, it need not be the same as the alkoxysilane used specifically as a curative in the moisture curable composition.

The moisture curable composition in accordance with the first aspect of the invention may prepared by mixing the constituents in any order. The catalyst may be prepared by mixing compounds (i) and (ii) and the resulting product being added to the polymer material and curative. However, it may also be prepared in an 'in-situ" form wherein at least one of the polymeric material or the curative may be pre-mixed with compound (i) and/or compound (ii).
A particularly preferred method of preparing the catalyst comprises mixing the alkoxysilane curative or alternatively a tertiary amyl alcohol with compound (i) and adding compound (ii) simultaneously with or subsequent to compound (i). The resulting catalyst composition is then added into the polymer material and alkoxysilane mixture. This latter method is particularly useful with respect to the preparation of zirconium based catalysts as in particular zirconium based versions of compound (i) tend to be relatively unstable. Typically compound (i) is first added to the the alkoxysilane

cross-linker, followed by compound(ii), the chelating agent, which is added gradually under agitation. A slight exotherm may be observed due to the exchange reaction between the alkoxy groups (leaving the metal atom) and the chelating agent. any appropriate equipment may be utilised, examples include any glass vessel or the like.

A further alternative method of making the composition comprises for example, adding compound (i) and compound (ii) or a mixture/reaction product thereof into a mixture of the polymeric material and the curative alkoxysilane. However, it is also possible to add compound (i) to the polymeric material and the curative alkoxysilane, mixing the three together and then finally adding compound (ii).

Any optional additional ingredients other than the filler may be incorporated at any stage of the mixing operation but are preferably added after the catalyst is formed. Compound (i) and the curative silane must however be added to the polymer prior to introduction of any filler but compound (ii) may be added either before, simultaneously or after the introduction of the filler.

After mixing, the compositions may be stored under substantially anhydrous conditions, for example in sealed containers, until required for use.

Compositions according to the invention may be formulated as single part formulations which are stable in storage but cure on exposure to atmospheric moisture and may be employed in a variety of applications, for example as coating, caulking and encapsulating materials. They are, however, particularly suitable for sealing joints, cavities and other spaces in articles and structures which are subject to relative movement. They are thus particularly suitable as glazing sealants and for sealing building structures. They have desired cure properties to provide cured seals of modulus sufficiently low for most industry standards and elongation to break which is sufficiently high for most industry standards.

In order that the invention may become more clear there now follows a description of example sealant compositions selected for description to illustrate the invention by way of example. In the description all compositions are expressed by weight % and all viscosities are at 25°C unless otherwise indicated.

Example 1

Table 1 shows the results of a series of tests which compare the use of various catalysts (c). The titanates used as compound (i) are colourless and active for curing ethylenetriethoxysilyl end-capped polydimethylsiloxane (ETE) polymers. A composition consisting of 93% by weight ETE polymer, 5% by weight methyltrimethoxysilane (MTM) curative and 2 % by weight of the mixture and/or reaction product was prepared and supplied into an appropriate retaining tube. The resulting sealant composition was aged for approximately two weeks in their respective tubes before evaluating the curing properties known as Skin over time (SOT) and Tack free time (TFT). Skin over time (SOT), represents the amount of time the end-user can take to tool his sealant joint to its final shape and was determined as the period of time during which the surface of an applied bead of the composition could be tooled or worked. Skin-Over-Time was measured by spreading the material to form a layer 0.32+/-0.08 cm thick on a clean smooth non porous surface. The sample was exposed to a relative humidity (RH) of 50% at 25°C and at one minute intervals the surface was lightly touched with a finger tip and the finger slowly drawn away. This was repeated every minute until the sample did not adhere to the finger tip. The time in minutes elapsed from spreading the material until the surface did not adhere to the finger tip was recorded as Skin-Over-Time. Tack free time (TFT), reflects the amount of time after which the sealant surface will no longer pick up dirt and was determined as the period of time elapsed between the extrusion of a bead of the composition and when the surface was no longer tacky to the touch. Tack-Free-Time was measured by spreading the material 2mm thick on a clean smooth non porous surface.

The sample was exposed to 50% RH at 22°C. At intervals of 5 minutes or less a clean polyethylene strip was laid on a fresh surface of the sample and gently pulled off. The time in minutes elapsed between spreading the sample and when the strip pulled away cleanly from the surface was recorded as the Tack-Free-Time.

It is to be noted that the use of the reaction products of tetra (tertiary butoxy) titanate and MPA or TFA resulted in faster composition cure rates when compared reaction products based on the tetra isopropoxy titanate or the tetra n-butoxy titanate. In addition to faster cure rate it was noted that curing with the tetra (tertiary butoxy) titanate catalysts resulted to significantly less discoloration. Hence it would seem that compositions containing reaction products of (tertiary butoxy) titanate require smaller amounts of compound (ii) in order to provide an active catalyst for the relevent compositions. Hence the molar equivalent of chelate against titanium atom can be maintained below or around 1.0 molar equivalent for such reaction products which, it is thought, assists in the prevention of discoloration with ageing of the cured composition.

When MPA was used as compound (ii) a very slight discoloration was noticed on occasion in cases where the amount of MPA used was > 1.0 molar equivalent. No discoloration was observed in any curing or ageing situation when using TFA as compound (ii). In comparison a similar composition prepared using ethyl acetoacetate (EAA) instead of compound (ii) produced an immediate yellowing discoloration upon curing which persisted throughout the shelf life of the composition.

Table 1:

| Activity of chelated titanate compounds. Compound (i) being of the formula $M[OR]_4$ | | | | | |
|---|---|---|---|---|---|
| ID# | Compound (it) | R group | Compound (i)/ Compound (ii) mole ratio | SOT (min) | TFT (min) |
| 1 | MPA | R= isopropyl | 1.0 / 0.5 | 23 | 38 |
| 2 | | " | 1.0 / 1.0 | 17 | 28 |
| 3 | | " | 1.0 / 1.5 | 17 | 28 |
| 4 | | R = n-butyl | 1.0 / 0.5 | 18 | 42 |
| 5 | | " | 1.0 / 1.0 | 12 | 19 |
| 6 | | " | 1.0 / 1.5 | 12 | 19 |
| 7 | | R' = tert-butyl | 1.0 / 0.5 | 6 | 12 |
| 8 | | " | 1.0 / 1.0 | 8 | 13 |
| 9 | | " | 1.0 / 1.5 | 19 | 31 |
| 10 | TFA | R = isopropyl | 1.0 / 0.5 | 36 | 60 |
| 11 | | " | 1.0 / 1.0 | 27 | 39 |
| 12 | | " | 1.0 / 1.5 | 32 | 45 |
| 13 | | R = n-butyl | 1.0 / 0.5 | 39 | 60 |
| 14 | | " | 1.0 / 1.0 | 23 | 38 |
| 15 | | " | 1.0 / 1.5 | 36 | 48 |
| 16 | | R= tert-butyl | 1.0 / 0.5 | 16 | 28 |
| 17 | | " | 1.0 / 1.0 | 20 | 34 |
| 18 | | " | 1.0 / 1.5 | 27 | 39 |

Example 2

A Masterbatch sealant composition was prepared by mixing 63 parts of a polymer, an ethylenetriethoxysilyl end-capped polydimethylsiloxane having a viscosity of 110000 centistokes, 20 parts of a polydimethylsiloxane fluid plasticiser having a viscosity of 100 centistokes, 2.2 parts of a methyltrimethoxysilane (MTM, curative 1) and 2.2 parts of isobutyltrimethoxysilane (iBTM, curative 2), 2.2 parts of Tyzor 9000 (compound(i)), 10.7 parts of a fumed silica filler (LM 150), 2 parts by weight of a silicone glycol rheology additive, 1.2 parts by weight of an amino-epoxysilane adhesion promoter and 0.3 parts of a fungicide, 10,10'-oxybisphenoxarsine in propylene-glycol (1000MW, sold as Vinyzene BP55) at room temperature in absence of moisture. The above masterbatch was used as the basis of the following tests.

Samples were prepared using a 5L batch mixer equipped with a planetary dispersing device and a vacuum line (DRAIS). In a first step, polymer and two thirds of the plasticiser were mixed together, followed by the addition of a premix slurry, consisting of the curatives, compound (i) and where used compound (ii). The filler was subsequently incorporated by step addition and the resulting mixture was dispersed for about 15 minutes. Subsequent to the dispersion stage the rheology additive, the adhesion promoter and the fungicide were then added together with the residual plasticiser. The final composition was stripped at the end of the compounding process for about three minutes prior to packaging the sealant into typical 310 ml polyethylene cartridges. The composition was then matured for about a week in its packaging under ambient conditions of the lab before testing.

SOT and TFT tests were run as described in Example 1. The colour was measured by visual evaluation with the sample retained between glass plates against a white surface in order to emphasise the "water white" (in the Tables "clear" signifies "colourless" or "water white")colour of the illustrative examples and the yellowish discoloration comparison using EAA. Samples were analysed both after initial room temperature cure and after ageing for 4 weeks at 50°C in a cartridge.

A strong yellow discoloration was observed when the EAA comparative composition was analysed. The discoloration was seen both upon initial mixing and ageing of the composition. Slight discoloration was noticed for reaction products in accordance with the first aspect of this invention having the highest compound (ii) : compound (i) molar equivalence for both MPA and TFA when stored for four weeks at 50°C. However, it was further noted that no further

discoloration was recorded for any of the sealant compositions after two months storage at room temperature.

Furthermore, when MPA was compound (ii) it was noticed that as the ratio of MPA: Compound (i) increased there was a gradual increase in value of SOT, and decrease in the TFT. Ideally, a sealant will have a sufficiently long SOT value, and a sufficiently short TFT in order to provide the most appropriate ease of use for sealing applications. Similar results were noted when TFA was used as compound (ii) up until approximately 0.8 molar equivalent of TtBT.

Table 2 Post Addition of Compound (ii)

| Composition | Comparative 1 | Example 1 | Example 2 | Example 3 | Example 4 | Example 5 | Example 6 | Comparative 2 |
|---|---|---|---|---|---|---|---|---|
| Polymer | 60.70% | 60.50% | 60.50% | 60.20% | 60.40% | 60.20% | 59.70% | 60.50% |
| Plasticiser | 19.30% | 19.20% | 19.20% | 19.10% | 19.20% | 19.10% | 19.00% | 19.20% |
| Cross-Linker 1 | 2.10% | 2.10% | 2.10% | 2.10% | 2.10% | 2.10% | 2.10% | 2.10% |
| Cross-Linder 2 | 2.10% | 2.10% | 2.10% | 2.10% | 2.10% | 2.10% | 2.10% | 2.10% |
| TtBT catalyst | 2.10% | 2.10% | 2.10% | 2.10% | 2.10% | 2.10% | 2.10% | 2.10% |
| Silica | 10.30% | 10.30% | 10.30% | 10.20% | 10.30% | 10.20% | 10.10% | 10.30% |
| Rheology Additive | 1.90% | 1.90% | 1.90% | 1.90% | 1.90% | 1.90% | 1.90% | 1.90% |
| Adhesion Promotor | 1.20% | 1.20% | 1.20% | 1.10% | 1.20% | 1.10% | 1.10% | 1.20% |
| Fungicide | 0.30% | 0.30% | 0.30% | 0.30% | 0.30% | 0.30% | 0.30% | 0.30% |
| Compound II - level | | 0.24% | 0.39% | 0.77% | 0.41% | 0.82% | 1.63% | 0.25% |
| Compound II - type | | MPA | MPA | MPA | TFA | TFA | TFA | EAA |
| Total w% | 100% | 100% | 100% | 100% | 100% | 100% | 100% | 100% |
| | | | | | | | | |
| Compound II mole equiv. | 0 | 0.27 | 0.44 | 0.88 | 0.36 | 0.72 | 1.44 | 0.31 |
| SOT min | 5 | 5 | 7 | 8 | 7 | 12 | 16 | 11 |
| TFT min | 40 | 16 | 11 | 9 | 16 | 14 | 24 | 33 |
| Adhesion | | | | | | | | |
| Finger test glass (%CF) | 50 | 75 | 100 | 100 | 90 | 100 | 100 | |
| Discolouration visual | | | | | | | | |
| after initial RT | none | none | none | none | none | none | none | yellow |
| after 4w50c in cartr | none | none | none | slight | none | none | slight | yellow |

The channel adhesion effects were analysed using a cohesive failure based test wherein each glass substrate was wiped with a 50/50 weight % solution of isopropanol and water and dried. The sealant composition was applied as a 12mm bead which was tooled to provide a bead of 0.5mm in depth. The composition was allowed to cure for either 4 or 7 days and then one end of the cured bead was undercut with a razor blade and pulled at 90° and the % of cohesive failure as a measure of the adhesion build-up was determined in accordance with the following formula:-

$$\frac{\text{width of cohesive failure in the centre of the bead}}{\text{total width of the joint}} \times 100$$

Example 3

In this example a comparison is provided between the basic masterbatch as described in example 2 and a composition wherein compound (ii) in the form of TFA is added into a premix comprising the curatives (MTM and iBTM), compound (i), TtBT , and compound (ii) in the desired molar amount. After compounding the sealant, and allowing it to rest in its packaged form for a week, curing, adhesive bonding, aesthetic and general physical properties were evaluated and it will be noted that the results relating to the composition in accordance with the current invention significantly improved over the comparative example.

For these sealant compositions, the residual surface tackiness (RST) was assessed after periods of six and 24 hours curing under ambient conditions using either a TA.XT2i Texture Analyzer or by touching the cured sample with either a hand or fingers. The texture analyzer instrument provided quantitative measurements of the tackiness by measuring the force needed to extract a given probe from the surface using the following method:-

A cylindrical ebonite probe of 1.27 cm (0.5 inch) diameter is moved at a speed of 1mm $s^{-1}$ towards the surfaceof a 2 mm deep sheet of sealant. A constant load of 3 Newton was applied on the surface for 5 seconds. The probe was then pulled away from the surface at a constant rate of 10 mm $s^{-1}$ until the probe was detached from the sealant surface. The peak force was measured and the resulting measurement corresponded to the adhesive strength or tack of the sealant under the test conditions i.e. the curing time and conditions - Relative Humidity/Temperature, applied and duration of the load.

Cure in depth (CID) was determined as the thickness in mm of the composition which was found to have cured to an elastomeric state during ageing at ambient temperature and humidity for a specified period.

Modulus 100% (MPa), Elongation at Break (%), Tensile Strength (MPa) and tear strength (kN/m) were measured using a moulded and cured standard test slab 2mm thick of each composition which had been cured by exposure to atmosphere at room temperature on a flat surface for at least 7 days. Tear strips were cut from the cured sample and stretched to breakpoint in a tensometer and the various measurements recorded.

The Adhesion and coloration testing were undertaken as previously describedand the results are indicated in Table 3.

Table 3 Full Compounding of Sealant including TFA (compound (ii)) into the Pre

| Composition | | Comparative | Example |
|---|---|---|---|
| | | Weight % | Weight % |
| Polymer | | 60.7 | 60.1 |
| Plasticiser | | 19.3 | 19.1 |
| PREMIX | | | |
| Cross Linker 1 | | 2.1 | 2.1 |
| Cross Linker 2 | | 2.1 | 2.1 |
| Compound I | Level | 2.1 | 2.1 |
| | Type | TtBT | TtBT |
| Compound II | Level | | 0.99 |
| | Type | | TFA |
| Silica | fumed 150m2/g | 10.3 | 10.2 |
| Rheology Additive | | 1.9 | 1.9 |
| Adhesion Promotor | | 1.2 | 1.1 |
| Fungicide | | 0.3 | 0.3 |
| | Total w% | 100 | 100 |
| Compound I/Compound II | mole equiv. | 0 | 0.87 |
| <u>Curing Tests</u> | | | |
| SOT | min | 5 | 10 |
| FTF | min | 42 | 29 |
| Residual Surface Tack | Peak Force at 6 hrs (N) | 9.2 | 6.3 |
| | HAND feeling | tacky | dry |
| | Peak Force at 24 hrs (N) | 6.8 | 2.2 |
| | HAND feeling | tacky | dry |
| CID | mm/24hrs@21C; 54%RH | 2.4 | 2.2 |
| | mm/72hrs@21C; 54%RH | 3.9 | 4 |
| <u>Physical Properties</u> | 2mm sheet, 1 week cure @ RH | | |
| Tensil strength | Mpa | 1.58 | 2.33 |
| MOD 100% | MPa | 0.36 | 0.41 |
| E Break | % | 533 | 753 |
| Tear Strength | kN / m | 4.63 | 5.54 |
| <u>Adhesion</u> | | | |
| Finger test | glass (%CF) | 20 | 100 |
| <u>Discolouration Visual</u> | | | |
| Initial RT | | none | none |
| after 4w50C in cartr. | | none | none |

Example 4

Table 4 shows a comparison of results wherein compound (i) in the form of Tyzor 9000 has been used as sole catalyst as well as in combination with (tertiary amyl) alcohol alone and in combination with (tertiary amyl) alcohol and TFA. It is to be noted that the addition of (tertiary amyl) alcohol alone provides an improved SOT and TFT results and particularly in relation to residual surface tackiness. However, the best results seem to be obtained when (tertiary amyl) alcohol and TFA are added in combination as the resulting product has a short TFT and RST an increased SOT and 100% cohesive failure to glass without any discoloration problem in the resulting sealant.

Example 5

In examples 5 to 7 the tack free time (TFT) was measured using an alternative method as described below:-

The curable composition of the present invention was used to coat a substrate (PET film) in a thickness of approximately 3 mm, a polyethylene film was placed over this at 20°C and a relative humidity of 55%, a weight of 30 g was placed on this for 30 seconds, the polyethylene film was then peeled off, and the TFT was measured as the time it took until the curable composition no longer adhered (time elapsed after coating).

For the first 10 minutes from the start (elapsed time: 0 minutes), measurements were made every minute (the polyethylene film was peeled off every time 1 minute elapsed; the same applies hereinafter), then every 2 minutes during the period from 10 to 20 minutes of elapsed time, and finally every 5 minutes during the period from 20 to 160 minutes of elapsed time.

Table 4

| | | **weight %** | **%weight** | **%weight** | **%weight** |
|---|---|---|---|---|---|
| Polymer | | **60.7%** | **60.5%** | **60.4%** | **61.1%** |
| Fluid | | **19.3%** | **19.2%** | **19.2%** | **19.4%** |
| Cross-Linker 1 | | **2.1%** | **2.1%** | **2.1%** | **2.1%** |
| Cross-Linker 2 | | **2.1%** | **2.1%** | **2.1%** | **2.1%** |
| Compound I | | **2.1% Tyzor** | **2.1% 90 Tyzor** | **2.1% 90 Tyzor** | **2.1% 90 Tyzor 90** |
| co-catalyst additive 1 | | | **0.27% tAmOH** | **0.55% tAmOH** | **0.28% tAmOH** |
| Compound II | | | | | **0.17% TFA** |
| Rheology Additive | | **1.9%** | **1.9%** | **1.9%** | **1.9%** |
| Silica | | **10.3%** | **10.3%** | **10.3%** | **10.4%** |
| Adhesion Promotor | | **1.2%** | **1.2%** | **1.1%** | **none** |
| Fungicide | | **0.3%** | **0.3%** | **0.3%** | **0.3%** |
| Physical properties @ RT aged composition | | | | | |
| **SOT** | min | 11 | 7 | 23 | 16 |
| **TFT** | min | 42 | 30 | 63 | 21 |
| **Residual Surf** | **T average 6 hours** | **9.2** | **9.0** | **9.4** | **9.8** |
| | HAND feeling (0=be | **2** | **1** | **1** | **1** |
| **Residual Surf** | **T average 24 hours** | **6.8** | **6.9** | **6.2** | **3.5** |
| | HAND feeling (0=be | **2** | **1** | **1** | **1** |
| **CID** | mm/24hrs @ 21C; 54 | 2.4 | 2.9 | 2.6 | 2.6 |
| | mm/72hrs @ 21C; 54 | 3.9 | 4.0 | 3.7 | 4.2 |
| **Weight loss** | weight % @150C/3 h | 2.55 | 2.51 | 2.69 | 3.01 |
| 2 mm sheet, 1 week cure @ RT | | | | | |
| **Tensile strengh** | MPa | 1.58 | 1.56 | 1.46 | 2.00 |
| **MOD100%** | MPa | 0.36 | 0.38 | 0.32 | 0.33 |
| **EBreak** | % | 533 | 520 | 540 | 654 |
| **Hard.** | ShA | 10 | 11 | 8 | 9 |
| **Tear strength** | kN / m | 4.63 | 5.55 | 5.03 | 5.64 |
| **Adhesion** | | | | | |
| Finger test | glass (%CF) | 20 | 20 | 40 | 100 |
| **Colour (visual)** | initial RT | **transp.** | **Slight** | **Y transp.** | **transp.** |
| | after 4w50C in car | **transp.** | **Yellow** | **transp.** | **transp.** |

finally every 5 minutes during the period from 20 to 160 minutes of elapsed time.

Samples 5.1 to 5.4 were prepared by uniformly mixing 2 mass parts of a zirconium catalyst as shown in Table 5(a), 100 mass parts of a dimethylpolysiloxane expressed by the formula $(C_2H_5O)_3Si-CH_2CH_2-SiMe_2-O-(SiMe_2O)_x-SiMe_2-CH_2CH_2-Si(OC_2H_5)_3$ having a viscosity at 25°C of 20,000 mPa s, and 2.5 mass parts methyltrimethoxysilane.

The resulting samples were stored in a sealed glass bottle at a temperature of 50°C, for a period of 14 days. The samples were periodically checked for discoloration and transparency and the tack free time (TFT) was also measured in order to check for curability.

The test results are given in Table 5(a) below.

Table 5 (a)

| Zirconium catalyst used | | 5.1 | 5.2 | 5.3 | 5.4 |
|---|---|---|---|---|---|
| $Zr(CF_3C(=O)CH_2C(=O)CF_3)_4$ | | O | - | - | - |
| $Zr(Me_3CC(=O)CH_2C(=O)CMe_3)_4$ | | | O | - | - |
| $Zr(CF_3C(=O)CH_2C(=O)CMe_3)_4$ | | - | - | O | - |
| $Zr(CF_3C(=O)CH_2C(=O)CH_3)_4$ | | - | - | - | O |
| Test for discoloration in curable silicone composition | Discoloration after storage for 14 days at 50°C<br>· dark discoloration: ×<br>· light discoloration: ○<br>· no discoloration: ⊕ | ⊕ | ⊕ | ⊕ | ⊕ |

As is clear from Table 5(a), no discoloration or deterioration in transparency was observed over time in any of the samples. As to curability, the tack free time in every case was under 60 minutes.

Samples 5.5 to 5.7

Compounds expressed by the following formula were prepared by reacting $(isopropoxy)_4Zr$ and $CF_3C(=O)CH_2C(=O)OC_2H_5$ in various proportions, and samples were otherwise produced in the same manner as in Example 1. [0069]Changes in color and transparency over time and the tack free time after storage were measured.

These results are given in Table 5(b).

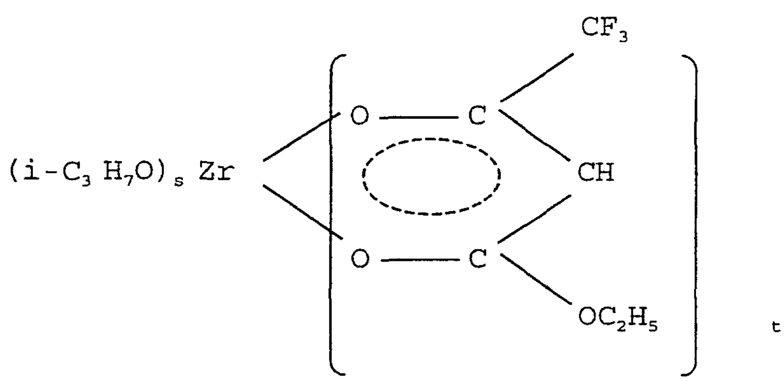

Table 5(b)

| | | Initially | | After 4 months aging at 50°C | | |
|---|---|---|---|---|---|---|
| No. | | Color | Transparency | Discoloration | Transparency | Tack free time (min) |
| 5.5 | s = 2, t = 2 | colorless | good | none | good | 34 |
| 5.6 | s = 1, t = 3 | colorless | good | none | good | 47 |
| 5.7 | s = 0, t = 4 | colorless | good | none | good | 60 |

Sample 5.8

Di(isopropoxy)zirconium bis(methylpivaloylacetate) was prepared by reacting tetra(isopropoxy)Zirconium and methyl pivaloylacetate. The sample was prepared in the same manner as samples 5.1 to 5.4, but using the above compound, and changes in color, transparency over time, and tack free time after storage were measured. The initial sample was colorless and had good transparency. After 4 months of aging at 50°C there was no discoloration, the transparency was still good, and the tack free time was 75 minutes.

Samples 5.9 to 5.12 and Comparative Example (CE1)

Samples were prepared by mixing 100 mass parts polydimethylsiloxane A, 3 mass parts methyltrimethoxysilane, 3 mass parts of the chelate zirconium compound shown in Table 5(c) below, 12 mass parts filler, and 0.5 mass parts of an adhesion promoter. Each sample was sealed in a glass bottle for storage, the change in color and the transparency after curing (24 hours at room temperature) were checked, and the tack free time was measured. The test results are given in Table 5(c) .

Polydimethylsiloxane A was manufactured by the following method.

100 mass parts of a polydimethylsiloxane capped at both ends of the chain with hydroxyl groups (viscosity at 25°C: 70 mPa.s) was heated to 185°C and added to a mixture of 2.4 mass parts of a polydimethylsiloxane (viscosity at 25°C: 10 mPa.s) having SiH groups at the ends and containing 0.16 mass% SiH bonds and 0.6 mass part of a polydimethylsiloxane capped at both ends of the chain with trimethylsilyl groups (viscosity at 25°C: 10 mPa.s). A dichloromethane solution of PNCl (phosphonitrile chloride, 20 ppm by weight of the above-mentioned hydroxyl-terminated polydimethylsiloxane) was added to this system. Heated air was passed through the mixture, which initiated a polycondensation reaction and an equilibrium reaction while the water was removed from the system. Upon completion of the reaction, the system was cooled to 50°C, hexamethylcyclosilazane was added in an amount corresponding to 1000 ppm (weight) with respect to the weight of the above-mentioned hydroxyl-terminated polydimethylsiloxane to neutralize the PNCl. To 100 mass parts of the reaction product thus obtained was added 1.08 mass parts vinyltriethoxysilane, and these components were reacted in the presence of a platinum complex of divinyltetramethyldisiloxane (0.12 mass part). The product was a polydimethylsiloxane that had a viscosity at 25°C of 20,000 mPa. s, 70% of the end groups were $(C_2H_5O)_3SiCH_2CH_2$-groups, and the other 30% were $(CH_3)_3Si$- groups.

Table 5(c)

| | | Color | TFT (min) | Transparency |
|---|---|---|---|---|
| Sample | Chelate zirconium compound | Start 7 days/ 0°C 35 days/ 50°C | 35 days/50°C | 35 days/50°C |
| 9 | di(n-butoxy)zirconium bis(methylpivaloylacetate) | ← colorless, transparent → | 58 | good |
| 10 | 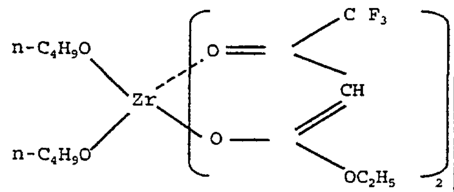 di(n-butoxy)zirconium bis(ethyltrifluoromethylacetate) | ← colorless, transparent → | 60 | good |
| CE 1 | 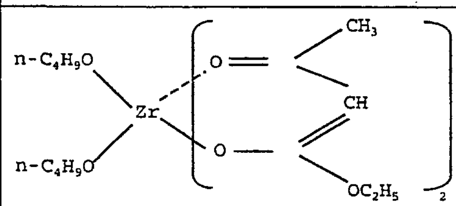 di(n-butoxy)zirconium bis(ethylacetoacetate) | ←-- pale yellow color --→ | 110 | turbidity |

* Transparency after curing (24 hours at room temperature)

Table 5(c) (cont.)

| | | Color | TFT (min) | Transparency * |
|---|---|---|---|---|
| | Chelate zirconium compound | Start 7 days/50°C 35 days/50°C | 35 days/50°C | 35 days/50°C |
| 11 | 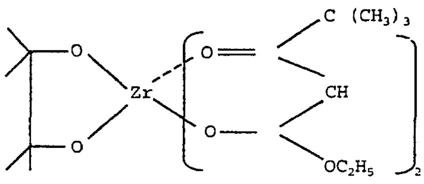 2,3-dimethyl-2,3-dioxybutanezirconium bis (ethylpivaloylacetate) | ← colorless, transparent → | 60 | good |
| 12 | 2-methyl-2,4-dioxypentanezirconium bis ethyltrifluoromethylacetoacetate) | ← colorless, transparent → | 75 | good |

* Transparency after curing (24 hours at room temperature)

Samples 5.13 to 5.18 were prepared by mixing 100 mass parts polydimethylsiloxane A, 3 mass parts methyltrimethoxysilane, 3 mass parts of the zirconium catalyst shown in Table 5(d) below, 12 mass parts silica filler (RTDX130, made by Aerosil), and an adhesion promoter (25% aminopropyltrimethoxysilane and 75% gamma-glycidoxytrimethoxysilane). The change in color and the transparency after curing (24 hours at room temperature, and made into a test piece measuring 2 mm thick, 2 cm long, and 2 cm wide) were checked, and the tack free time was measured. The test results are given in Table 5.d.

Table 5(d)

| | | Color | TFT (min) | Transparency after curing |
|---|---|---|---|---|
| | Chelate zirconium compound | Start 14 days/50°C | Start 14 days/50°C | 14 days/50°C |
| 13 | di(n-butoxy)zirconium bis(methylpivaloylacetate) | ← colorless, transparent → | 40 47 | good |
| 14 | 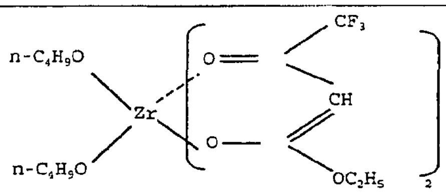<br>di(n-butoxy)zirconium bis (ethyltrifluoromethylacetoacetate) | ← colorless, transparent → | 55 51 | good |
| 15 | 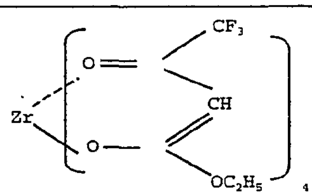<br>Tetra(ethyltrifluoromethyl acetoacetate) zirconium | ← colorless, transparent → | 55 49 | good |
| 16 | di(i-propoxy)zirconium bis(methylpivaloylacetate) | ← colorless, transparent → | 35 34 | good |
| 17 | 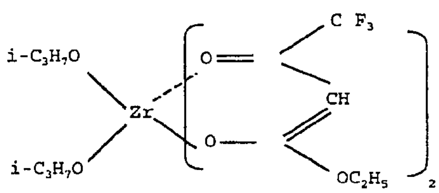<br>di(i-propoxy)zirconium bis (ethyltrifluoromethylacetoacetate) | ← colorless, transparent → | 25 42 | good |
| 18 | di(n-butoxy)zirconium bis(pivaloylmethane) | ← colorless, transparent → | 60 58 | good |

Examples 5.19 to 5. 22

Samples were prepared by mixing 100 mass parts polydimethylsiloxane A, 3 mass parts methyltrimethoxysilane, and 3 mass parts of the zirconium catalyst shown in Table 5(e) below. The change in color and the transparency after curing were checked, and the tack free time was measured. The test results are given in Table 5.

Table 5(e)

| | Chelate zirconium compound used | Color Start | 21 days/ 50°C | TFT (min) | Transparency after curing |
|---|---|---|---|---|---|
| Ex 19 | di(t-butoxy)zirconium bis(methylpivaloylacetate) | colorless, transparent | colorless, transparent | 30 | good |
| Ex 20 | di(t-amyl)zirconium bis(methylpivaloylacetate) | colorless, transparent | colorless, transparent | 28 | good |
| Ex 21 | 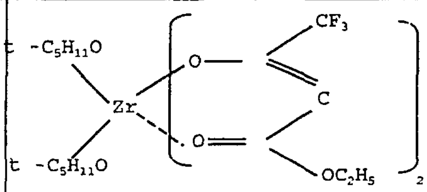 di(t-amyl)zirconium bis (ethyltrifluoromethyl acetoacetate) | colorless, transparent | colorless, transparent | 35 | good |
| Ex 22 | di(t-amyl)zirconium bis(pivaloylmethane) | colorless, transparent | colorless, transparent | 55 | slight turbidity |

Example 6

The polydiorganosiloxane B used in the following examples and comparative examples is expressed by the formula $(C_2H_5O)_3Si\text{-}CH_2CH_2\text{-}SiMe_2\text{-}O\text{-}(SiMe_2O)_x\text{-}SiMe_2\text{-}CH_2CH_2\text{-}Si(OC_2H_5)_3$, and is a polydimethylsiloxane whose viscosity at 25°C is 20,000 mPa.s.

Samples 6.1 to 6.12 and Comparative Examples CS6.1 to CS6.3 were prepared by first preparing the catalyst by mixing the various tetraorganotitanates and ketone compounds shown in Table 6 (a) (in the molar ratios indicated in the Table) for 3 hours at room temperature. 2.15 mass parts of the resulting catalysts which were thus obtained were each mixed with polydiorganosiloxane B (100 mass parts) and an alkoxysilane curative (5.37 mass parts) to produce a sample.

The resulting samples were stored at 50°C for 28 days in a sealed glass bottle after which they were checked for discoloration over time, transparency and the tack free time (TFT) was measured in order to check curability.

The test results are given in Table 6(a) below

As is clear from Table 6(a), samples 6.1 to 6.9, prepared using a titanium catalyst with a methyl pivaloylacetate chelate, were all colorless from the outset, and no discoloration or loss of transparency was seen over time. An appropriate level of curability, was maintained in all cases.

In Samples 6.10 and 6.11, in which dipivaloylmethane was used in place of the methyl pivaloylacetate, the results were the same as in the above-mentioned examples. The same results were also obtained in sample 12, in which ethyl-3-(1-adamantyl)-3-oxopropionate was used in place of the methyl pivaloylacetate. In contrast, in each of the samples CS1 to CS3 were observed to be discolored from the outset, and transparency was seen to deteriorate.

Table 6(a)

| | | CS 6.1[1] | 6.1 | 6.2 | 6.3 | 6.4 | 6.5 | 6.6 | 6.7 | 6.8 | 6.9 | 6.10 | 6.11 | 6.12 | CS 6.2[1] | CS 6.3[1] |
|---|---|---|---|---|---|---|---|---|---|---|---|---|---|---|---|---|
| Tetra-organo-titanate | tetraisopropoxytitanium | 1 | 1 | 1 | 1 | | | | | | | 1 | | 1 | 1 | 1 |
| | tetrabutoxytitanium | | | | | 1 | 1 | 1 | | | | | | | | |
| | tetra-tert-butoxytitanium | | | | | | | | 1 | 1 | 1 | | 1 | | | |
| Ketone compound | ethyl acetoacetate | 2 | | | | | | | | | | | | | | |
| | methyl pivaloylacetate | | 2 | 1 | 0.5 | 2 | 1 | 0.5 | 2 | 1 | 0.5 | | | | | |
| | dipivaloylmethane | | | | | | | | | | | 2 | 2 | | | |
| | ethyl-3-(1-adamantyl)-3-oxopropionate | | | | | | | | | | | | | 2 | | |
| | ethyl benzoylacetate | | | | | | | | | | | | | | 2 | |
| | ethyl isobutylacetate | | | | | | | | | | | | | | | 2 |
| Discoloration test | Discoloration of curable silicone composition after 28 days of storage at 50°C:<br>×: dark discoloration<br>O: light discoloration<br>⊕: no discoloration | × (yellowed) | ⊕ | ⊕ | ⊕ | ⊕ | ⊕ | ⊕ | ⊕ | ⊕ | ⊕ | ⊕ | ⊕ | ⊕ | × | × |
| Tack free time | (minutes) | 28 | 28 | 28 | 38 | 19 | 19 | 42 | 31 | 13 | 12 | 60 | 60 | 17 | 30 | 17 |
| Transparency after curing | ×: opaque<br>O: good transparency | × | O | O | O | O | O | O | O | O | O | O | O | O | × | × |

[1] CE: Comparative Example

Example 7

In this example the catalyst and samples were made using an identical process to that described in example 6. Furthermore, the resulting samples were stored and tested in the same way. The molar ratios of tetraorganotitanate to chelate are provided in table 7(a)

As will be seen from Table 7(a) samples 7.1 to 7.9, featuring a chelate titanium catalyst in which [ethyl] trifluoroacetoacetate was used, were all colorless from the outset, and no discoloration or loss of transparency was seen over time. In contrast, CS 7.1 was observed to be discolored from the outset, and transparency was seen to deteriorate. An appropriate level of curability, was maintained in all cases.

Example 8

A further masterbatch sealant composition was prepared by mixing 63 parts of a polymer, an triethoxysilyl end-capped polydimethylsiloxane having a viscosity of 110000 centistokes, 20 parts of a polydimethylsiloxane fluid plasticiser having a viscosity of 100 centistokes, 2.6 parts of a methyltrimethoxysilane (MTM, curative 1) and 2.6 parts of isobutyltrimethoxysilane (iBTM, curative 2), 2.2 parts of a tetra (tertiary butoxy) titanate (compound(i)), 10.5 parts of a fumed undensified silica filler (LM 150), 1.2 parts by weight of a silicone glycol rheology additive, 1 part by weight of an amino-epoxysilane adhesion promoter at room temperature in absence of moisture. The above masterbatch was used as the basis of the following tests.

Table 7(a)

| | | CE 1 | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|---|---|
| Tetra-organo-titanate | tetraisopropoxytitanium | 1 | 1 | 1 | 1 | | | | | | |
| | tetrabutoxytitanium | | | | | 1 | 1 | 1 | | | |
| | tetra-tert-butoxytitanium | | | | | | | | 1 | 1 | 1 |
| Ketone compound | ethyl acetoacetate | 2 | | | | | | | | | |
| | ethyl trifluoromethylacetoacetate | | 2 | 1 | 0.5 | 2 | 1 | 0.5 | 2 | 1 | 0.5 |
| Discoloration test of curable silicone composition | Discoloration after 14 days storage at 50°C:<br>×: dark discoloration<br>O: light discoloration<br>⊕: no discoloration | × yellowed | ⊕ | ⊕ | ⊕ | ⊕ | ⊕ | ⊕ | ⊕ | ⊕ | ⊕ |
| Tack free time | (minutes) | 28 | 45 | 39 | 60 | 48 | 38 | 60 | 39 | 34 | 28 |
| Transparency after curing | ×: opaque<br>O: good | × | O | O | O | O | O | O | O | O | O |

Channel adhesion tests were undertaken using the above masterbatch alone and in combination with 0.25% by weight of the complete composition of ethyl acetoacetate (EAA, comparative), 0.5% by weight of the complete composition TFA and 0.25% by weight of the complete composition of MPA respectively.

The cohesive failure test was the same as disclosed in Example 2.

Table 8.1

| Improvement of Channel Adhesion by Chelating titanate | | |
|---|---|---|
| Compound (ii) | % Cohesive failure after 4 days cure | % Cohesive failure after 7 days cure |
| EAA | 100 | 100 |
| TFA | 100 | 100 |
| MPA | 100 | 100 |
| Masterbatch | 30 | 50 |

It is to be noted that whilst EAA gave good channel adhesion results the expected yellow discoloration was observed. As expected neither TFA or MPA caused any discoloration.

## Claims

1. A moisture curable composition capable of cure to an elastomeric body, the composition comprising

    a) a polymeric material having not less than two hydroxyl or hydrolysable groups
    b) an alkoxysilane curative and
    c) a catalyst comprising a mixture and/or reaction product of a compound (i) selected from $M[OR]_4$ and $M[OR']_x[Z]_z$

    wherein
    M represents a metal having a valency of 4 selected from Group IVB of the Periodic Table, each R and R' is the same or different and is selected from a primary, secondary or tertiary aliphatic hydrocarbon and $SiR^9_3$, where each $R^9$ is an alkyl group having 1 to 6 carbon atoms and
    Z is a group of the formula -O-Y -O- wherein Y is an alkylene group comprising 1 to 8 carbon atoms or a branched alkylene radical comprising 1 to 8 carbon atoms and x is 0 or 2 in which case when x is 0, z is 2 and when x is 2, z is 1; and
    a compound ii) of the general formula

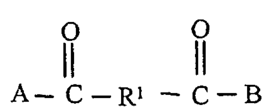

    wherein $R^1$ is selected from a methylene group or a substituted methylene radical having 1 to 6 carbon atoms,
    A is selected from $-(CX_2)_nC(R^2)_3$ wherein n is from 0 to 5, and an adamantyl group or a derivative thereof;
    B is selected from the group of
    $-(CX_2)_tC(R^2)_3$ wherein t is from 0 to 5;
    a monovalent alkyl group having from 1 to 6 carbon atoms and; $OR^3$, wherein $R^3$ is selected from the group of $-(CX_2)_tC(R^2)_3$ and a monovalent alkyl group having from 1 to 6 carbon atoms; wherein each X is the same or different and is selected from the group of a halogen radical and hydrogen, each $R^2$ is the same or different and is selected from the group of a halogen radical and an alkyl radical having one to eight carbon atoms, and when n is greater than 0 at least one of X or $R^2$ is a halogen radical

2. A composition in accordance with claim 1 wherein compound (ii) is selected from Methyl pivaloylacetate and Ethyl 4,4,4-trifluoroacetoacetate.

**3.** A composition in accordance with claim 1 wherein M in catalyst (c) is titanium.

**4.** A composition in accordance with claim 1 or 3 wherein the catalyst (c) comprises one or more of di-tert-butoxytitanium bis(ethyl-3-oxo-4,4-dimethylhexanoate), diisopropoxytitanium bis(methyl-3-oxo-4,4-dimethylhexanoate), 2,3-dimethyl-2,3-dioxybutanetitanium bis(methyl pivaloylacetate), 2-methyl-2,4-dioxypentanetitanium bis(methyl pivaloylacetate), 1,3-dioxypropanetitanium bis(methyl pivaloylacetate), 1,2-dioxyethanetitanium bis(methyl-3-oxo-4,4-dimethylhexanoate), 2,3-dimethyl-2,3-dioxybutanetitanium bis(methyl-3-oxo-4,4-dimethylhexanoate), 2-methyl-2,4-dioxypentanetitanium bis(methyl-3-oxo-4,4-dimethylhexanoate), diisopropoxytitanium bis(ethyltrifluoromethylacetoacetate), di-tert-butoxytitanium bis(ethyltrifluoromethylacetoacetate), di-tert-butoxytitanium bis (methylpentafluoroethylacetoacetate), diethoxytitanium bis(ethylpentafluoroethylacetoacetate), 2,3-dimethyl-2,3-dioxybutanetitanium bis(ethyltrifluoromethylacetoacetate), 2-methyl-2,4-dioxypentanetitanium bis(ethyltrifluoromethylacetoacetate), 1,3-dioxypropanetitanium bis(methylpentafluoroethylacetoacetate), 1,2-dioxyethanetitanium bis(ethylpentafluoroethylacetoaceate), 1,2-dioxyethanetitanium bis(methyltrifluoromethylacetoaceate), 1,3-dioxypropanetitanium bis(isopropyltrifluoromethylacetoaceate)and 2-methyl-2,4-dioxypentanetitanium bis (ethylpentafluoroethylacetoacetate).

**5.** A composition in accordance with claim 1 wherein M in catalyst (c) is zirconium.

**6.** A composition in accordance with claim 1 or 5 wherein the catalyst (c) comprises one or more of di(2-ethylhexoxy) zirconium bis(methylpivaloyloacetate), di(n-butoxy)zirconium bis(methylpivaloyloacetate), di(n-propoxy)zirconium bis(methylpivaloyloacetate), di(n-butoxy)zirconium bis(methyl-3-oxo-4,4-dimethylhexanoate), di(n-propoxy)zirconium bis(methyl-3-oxo-4,4-dimethylhexanoate), diisopropoxyzirconium bis(ethyltrifluoromethylacetoacetate), di-n-butoxyzirconium bis(ethyltrifluoromethylacetoacetate), di-n-propoxyzirconium bis(ethyltrifluoromethylacetoacetate), di-tertiary-butoxyzirconium bis(ethylpentafluoroethyl acetoacetate), diisopropoxyzirconium bis(ethylpentafluoroethylacetoacetate), di-n-butoxyzirconium bis(ethylpentafluoroethylacetoacetate), 1,2-dioxyethanezirconium bis(methylpivaloyloacetate), 1,3-dioxypropanezirconium bis(methylpivaloyloacetate),2,4-dimethyl-2,4-dioxypentanezirconium bis(ethylpivaloyloacetate), 2,3-dimethyl-2,3-dioxybutanezirconium bis(ethylpivaloyloacetate), 1,2-dioxyethanezirconium bis(ethyltrifluoromethylacetoacetate), 1,3-dioxypropanezirconium bis(ethyltrifluoromethylacetoacetate), 2,3-dimethyl-2,3-dioxybutanezirconium bis(ethyltrifluoromethylacetoacetate), 2-methyl-2,4-dioxypentanezirconium bis(ethylpentafluoroethylacetoacetate), tetra(ethyltrifluoromethylacetate) zirconium, di-tert-amyloxyzirconium bis(methylpivaloyloacetate), di-tert-butoxyzirconium bis(ethyltrifluoromethylacetoacetate), di-tert-amyloxyzirconium bis(ethyltrifluoromethylacetoacetate), di-tert-amyloxyzirconium bis(ethylpentafluoroethylacetoacetate), diisopropoxyzirconium bis(methylpivaloylacetate),di(2-ethylhexoxy)zirconium bis(methylpivaloyloacetate) and di(n-butoxy)zirconium bis(methylpivaloyloacetate).

**7.** A composition in accordance with any preceding claim wherein polymeric material (a) has not less than two groups bonded to silicon which are hydroxyl or hydrolysable groups.

**8.** A moisture curable composition in accordance with claim 7 wherein polymeric material (a) is a linear or substantially linear polydiorganosiloxane having terminal groups selected from $-Si(R'')_2OH$, and $-Si(R'')_2-(D)_d-R'''-SiR''_k(OR^5)_{3-k}$, where D is $-R'''-(Si(R'')_2-O)_r-Si(R'')_2-$ , R" is selected from an alkyl group having from 1 to 6 carbon atoms, a vinyl group, a phenyl group and a fluorinated alkyl group, R"' is a divalent hydrocarbon group r is a whole number between 1 and 6 and d is 0 or a whole number, $R^5$ is an alkyl or oxyalkyl group in which the alkyl groups have up to 6 carbon atoms and k has the value 0, 1 or 2.

**9.** A composition in accordance with claim 8 wherein d is 0 or 1 R"' is an ethylene group, k is 0 and $R^5$ is an ethyl group.

**10.** A composition according to any preceding claim wherein the alkoxysilane is selected from methyltrimethoxysilane, vinyltrimethoxysilane, methyltriethoxysilane, isobutyltrimethoxysilane and vinyltriethoxysilane.

**11.** A composition according to any preceing claim wherein said composition further comprises a finely divided filler which is predominantly silica.

**12.** A Catalyst composition for catalyzing a reaction between a polymeric material having not less than two hydroxyl or hydrolysable groups and an alkoxysilane curative said catalyst comprising (a) a mixture and/or reaction product of a compound (i) selected from $M[OR]_4$ and $M[OR']_x[Z]_z$
wherein
M represents a metal having a valency of 4 selected from Group IVB of the Periodic Table, each R and R' is the

same or different and is selected from a primary, secondary or tertiary aliphatic hydrocarbon and SiR-$^{9}_{3}$, where each $R^9$ is an alkyl group having 1 to 6 carbon atoms and
Z is a group of the formula -O-Y-O- wherein Y is an alkylene group comprising 1 to 8 carbon atoms or a branched alkylene group comprising 1 to 8 carbon atoms and x is 0 or 2 in which case when x is 0, z is 2 and when x is 2, z is 1; and
a compound ii) of the general formula

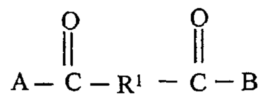

wherein $R^1$ is selected from a methylene group or a substituted methylene radical having 1 to 6 carbon atoms,
A is selected from $-(CX_2)_nC(R^2)_3$ wherein *n* is from 0 to 5, and an adamantyl group or a derivative thereof;
B is selected from the group of
$-(CX_2)_tC(R^2)_3$ wherein *t* is from 0 to 5;
a monovalent alkyl group having from 1 to 6 carbon atoms and; $OR^3$ , wherein $R^3$ is selected from the group of $-(CX_2)_tC(R^2)_3$ and a monovalent alkyl group having from 1 to 6 carbon atoms; wherein each X is the same or different and is selected from the group of a halogen radical and hydrogen, each $R^2$ is the same or different and is selected from the group of a halogen radical and an alkyl radical having one to eight carbon atoms, and when *n* is greater than 0 at least one of X or $R^2$ is a halogen radical; and
(b) an alkoxy silane or a tertiary amyl alcohol.

**13.** A catalyst in accordance with claim 12 wherein the alkoxysilane is methyltrimethoxysilane.

**14.** A method of forming the catalyst in accordance with claim 12 or 13 comprising mixing the alkoxysilane curative or (tertiary amyl) alcohol with compound (i) and adding compound (ii) simultaneously with or subsequent to compound (i).

**15.** A catalyst obtainable by the method of claim 14.

**16.** An elastomeric product comprising the moisture cured composition in accordance with any one of claims 1 to 11.

**17.** Use of a mixture and/or reaction product as defined in claim 11 as a catalyst in a moisture curable composition.

**18.** Use of a composition in accordance with any one of claims 1 to 13 as a sealant.

**Patentansprüche**

**1.** Feuchtigkeitshärtbare Zusammensetzung, die fähig ist, zu einem elastomeren Körper zu härten, wobei die Zusammensetzung enthält:

(a) ein polymeres Material mit nicht weniger als zwei Hydroxyloder hydrolysierbaren Gruppen,
(b) ein Alkoxysilanhärtungsmittel und
(c) einen Katalysator, der eine Mischung und/oder das Reaktionsprodukt einer Verbindung (i), ausgewählt aus $M[OR]_4$ und $M[OR']_x[Z]_z$,

worin M ein Metall mit einer Valenz von 4, ausgewählt aus Gruppe IVB des Periodensystems, darstellt, jedes R und R' gleich oder unterschiedlich ist und ausgewählt ist aus einem primären, sekundären oder tertiären aliphatischen Kohlenwasserstoff und $SiR^9_3$, wobei jedes $R^9$ eine Alkylgruppe mit 1 bis 6 Kohlenstoffatomen ist, und
Z eine Gruppe der Formel -O-Y-O- ist, worin Y eine Alkylengruppe mit 1 bis 8 Kohlenstoffatomen oder ein verzweigter Alkylenrest mit 1 bis 8 Kohlenstoffatomen ist und x gleich 0 oder 2 ist, wobei, falls x gleich 0 ist, z gleich 2 ist und falls x gleich 2 ist, z gleich 1 ist, und
eine Verbindung ii) der allgemeinen Formel

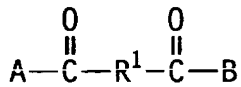

enthält, worin $R^1$ ausgewählt ist aus einer Methylengruppe oder einem substituierten Methylenrest mit 1 bis 6 Kohlenstoffatomen,

A ausgewählt ist aus $-(CX_2)_nC(R^2)_3$, worin n 0 bis 5 ist, und einer Adamantylgruppe oder einem Derivat davon:

B ausgewählt ist aus der Gruppe aus $-(CX_2)_tC(R^2)_3$, worin t 0 bis 5 ist:

einer monovalenten Alkylgruppe mit 1 bis 6 Kohlenstoffatomen und $OR^3$, worin $R^3$ ausgewählt ist aus der Gruppe $-(CX_2)_tC(R^2)_3$ und einer monovalenten Alkylgruppe mit 1 bis 6 Kohlenstoffatomen, wobei jedes X gleich oder unterschiedlich ist und ausgewählt ist aus der Gruppe aus einem Halogenrest und Wasserstoff, jedes $R^2$ gleich oder unterschiedlich ist und ausgewählt ist aus der Gruppe aus einem Halogenrest und einem Alkylrest mit 1 bis 8 Kohlenstoffatomen und wenn n größer als 0 ist, mindestens eines von X oder $R^2$ ein Halogenrest ist.

2. Zusammensetzung nach Anspruch 1, wobei Verbindung (ii) aus Methylpivaloylacetat und Ethyl-4,4,4-trifluoracetoacetat ausgewählt ist.

3. Zusammensetzung nach Anspruch 1, wobei M im Katalysator (c) Titan ist.

4. Zusammensetzung nach Anspruch 1 oder 3, wobei der Katalysator (c) ein oder mehrere aus Di-tert.-butoxytitan-bis(ethyl-3-oxo-4,4-dimethylhexanoat). Diisopropoxytitan-bis(methyl-3-oxo-4,4-dimethylhexanoat). 2,3-Dimethyl-2,3-dioxybutantitan-bis(methylpivaloylacetat), 2-Methyl-2,4-dioxypentantitan-bis(methylpivaloylacetat), 1,3-Dioxypropantitan-bis(methylpivaloylacetat). 1,2-Dioxyethantitan-bis(methyl-3-oxo-4,4-dimethylhexanoat), 2,3-Dimethyl-2,3-dioxybutantitan-bis(methyl-3-oxo-4,4-dimethylhexanoat), 2-Methy)-2,4-Dioxypentantitan-bis(methyl-3-oxo-4,4-dimethylhexanoat), Diisopropoxytitan-bis(ethyltrifluormethylacetoacetat), Di-tert.-butoxytitan-bis (ethyltrifuormethylacetoacetat), Di-tert.-butoxytitan-bis(methylpentafluorethylacetoacetat), Diethoxytitan-bis (ethylpentafluorethylacetoacetat), 2,3-Dimethyl-2,3-dioxybutantitan, Bis(ethyltrifluormethylacetoacetat), 2-Methyl-2,4-dioxypentantitan-bis(ethyltrifluormethylacetoacetat), 1,3-Dioxypropantitan-bis(methylpentafluorethylacetoacetat), 1,2-Dioxyethantitan-bis(ethylpentafluorethylacetoacetat), 1,2-Dioxyethantitan-bis(methyltrifluormethylacetoacetat), 1,3- Dioxypropantitan-bis(isopropyltrifluormethylacetoacetat) und 2-Methyl-2,4-dioxypentantitan-bis (ethylpentafluorethylacetoacetat) enthält.

5. Zusammensetzung nach Anspruch 1, wobei M im Katalysator (c) Zirconium ist.

6. Zusammensetzung nach Anspruch 1 oder 5, wobei der Katalysator (c) ein oder mehrere aus Di(2-ethylhexoxy) ziconium-bis(methylpivaloylacetat), Di(n-butoxy)zirconium-bis(methylpivaloylacetat), Di(n-propoxy)zirconium-bis (methylpivaloylacetat), Di(n-butoxy)zirconium-bis(methyl-3-oxo-4,4-dimethylhexanoat), Di(n-propoxy)zirconium-bis(methy1-3-oxo-4,4-dimethylhexanoat), Diisopropoxyzirconium-bis(ethyltrifluormethylacetoacetat), Di-n-butoxyzirconium-bis(ethyltrifluormethylacetoacetat), Di-n-propoxyzirconium-bis(ethyltrifluormethylacetoacetat), Di-tert.-butoxyzirconium-bis(ethylpentafluorethylacetoacetat), Diisopropoxyzirconium-bis(ethylpentafluorethylacetoacetat), Di-nbutoxyzirconium-bis(ethylpentafluorethylacetoacetat), 1,2-Dioxyethanzirconium-bis(methylpivaloylacetat), 1,3-Dioxypropanzirconium-bis(methylpivaloylacetat), 2.4-Dimethyl-2,4-dioxypentanzirconium-bis (ethylpivaloylacetat), 2,3-Dimethyl-2,3-dioxybutanzirconium-bis(ethylpivaloylacetat), 1,2-Dioxyethanzirconium-bis(ethyltrifluormethylacetoacetat), 1,3-Dioxypropanzirconium-bis(ethyltrifluormethylacetoacetat), 2,3-Dimethyl-2,3-dioxybutanzirconium-bis(ethyltrifluormethylacetoacetat), 2-Methyl-2,4-dioxypentanzirconium-bis(ethylpentafluorethylacetoacetat), Tetra(ethyltrifluormethylacetat)zirconium, Di-tert.-amyloxyzirconium-bis(methylpivaloylacetat), Di-tert.-butoxyzirconiumbis(ethyltrifluormethylacetoacetat), Di-tert.-amyloxyzirconiumbis(ethyltrifluormethylacetoacetat), Di-tert.-amyloxyzirconiumbis(ethylpentafluorethylacetoacetat), Diisopropoxyzirconium-bis(methylpivaloylacetat), Di(2-ethylhexoxy)zirconium-bis(methylpivaloylacetat) und Di(n-butoxy)zirconium-bis(methylpivaloylacetat) enthält.

7. Zusammensetzung nach einem der vorstehenden Ansprüche, wobei polymeres Material (a) nicht weniger als zwei Gruppen, die an Silicium gebunden sind, aufweist, die Hydroxyl- oder hydrolysierbare Gruppen sind.

8. Feuchtigkeitshärtbare Zusammensetzung nach Anspruch 7, wobei das polymere Material (a) ein lineares oder im Wesentliches lineares Polydiorganosiloxan mit endständigen Gruppen, ausgewählt aus $-Si(R'')_2OH$ und -Si

$(R'')_2$-$(D)_d$-R''' -$SiR''_k(OR^5)_{3-k}$, ist, wobei D gleich -R'''-$Si(R'')_2$-$O)_r$-$Si(R'')_2$- ist, R'' aus einer Alkylgruppe mit 1 bis 6 Kohlenstoffatomen, einer Vinylgruppe, einer Phenylgruppe und einer fluorierten Alkylgruppe ausgewählt ist, R''' eine divalente Kohlenwasserstoffgruppe ist, r eine ganze Zahl zwischen 1 und 6 ist und d gleich 0 oder eine ganze Zahl ist, $R^5$ eine Alkyl- oder Oxyalkylgruppe ist, in welcher die Alkylgruppen bis zu 6 Kohlenstoffatome haben, und k den Wert 0, 1 oder 2 hat.

**9.** Zusammensetzung nach Anspruch 8, wobei d gleich 0 oder 1 ist, R''' eine Ethylengruppe ist, k gleich 0 ist und $R^5$ eine Ethylgruppe ist.

**10.** Zusammensetzung nach einem der vorstehenden Ansprüche, wobei das Alkoxysilan ausgewählt ist aus Methyltrimethoxysilan, Vinyltrimethoxysilan, Methyltriethoxysilan, Isobutyltrimethoxysilan und Vinyltriethoxysilan.

**11.** Zusammensetzung nach einem der vorstehenden Ansprüche, wobei diese Zusammensetzung ferner einen feinverteilten Füllstoff enthält, der hauptsächlich Siliciumdioxid ist.

**12.** Katalysatorzusammensetzung zum Katalysieren einer Reaktion zwischen einem polymeren Material mit nicht mehr als zwei Hydroxyl- oder hydrolysierbaren Gruppen und einem Alkoxysilanhärtungsmittel, wobei dieser Katalysator enthält: (a) eine Mischung und/oder das Reaktionsprodukt einer Verbindung (i), ausgewählt aus $M[OR]_4$ und $M[OR']_x[Z]_z$, worin M ein Metall mit einer Valenz von 4, ausgewählt aus Gruppe IVB des Periodensystems, darstellt, jedes R und R' gleich oder unterschiedlich ist und ausgewählt ist aus einem primären, sekundären oder tertiären aliphatischen Kohlenwasserstoff und $SiR^9_3$, wobei jedes $R^9$ eine Alkylgruppe mit 1 bis 6 Kohlenstoffatomen ist, und

Z eine Gruppe der Formel -0-Y-0- ist, worin Y eine Alkylengruppe mit 1 bis 8 Kohlenstoffatomen oder eine verzweigte Alkylengruppe mit 1 bis 8 Kohlenstoffatomen ist und x gleich 0 oder 2 ist, wobei, falls x gleich 0 ist, z gleich 2 ist und falls x gleich 2 ist, z gleich 1 ist, und

einer Verbindung ii) der allgemeinen Formel

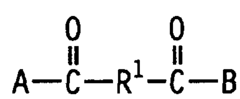

enthält, worin $R^1$ ausgewählt ist aus einer Methylengruppe oder einem substituierten Methylenrest mit 1 bis 6 Kohlenstoffatomen,

A ausgewählt ist aus $-(CX_2)_nC(R^2)_3$, worin n 0 bis 5 ist, und einer Adamantylgruppe oder einem Derivat davon;

B ausgewählt ist aus der Gruppe aus $-(CX_2)_tC(R^2)_3$, worin t 0 bis 5 ist;

einer monovalenten Alkylgruppe mit 1 bis 6 Kohlenstoffatomen und $OR^3$, worin $R^3$ ausgewählt ist aus der Gruppe $-(CX_2)_tC(R^2)_3$ und einer monovalenten Alkylgruppe mit 1 bis 6 Kohlenstoffatomen, wobei jedes X gleich oder unterschiedlich ist und ausgewählt ist aus der Gruppe aus einem Halogenrest und Wasserstoff, jedes $R^2$ gleich oder unterschiedlich ist und ausgewählt ist aus der Gruppe aus einem Halogenrest und einem Alkylrest mit 1 bis 8 Kohlenstoffatomen und wenn n größer als 0 ist, mindestens eines von X oder $R^2$ ein Halogenrest ist, und

(b) ein Alkoxysilan oder einen tertiären Amylalkohol.

**13.** Katalysator nach Anspruch 12, wobei das Alkoxysilan Methyltrimethoxysilan ist.

**14.** Verfahren zur Bildung des Katalysators gemäß Anspruch 12 oder 13, umfassend Mischen des Alkoxysilanhärtungsmittels oder tertiären Amylalkohols mit Verbindung (i) und Hinzufügen von Verbindung (ii) gleichzeitig mit oder nach Verbindung (i).

**15.** Katalysator, erhältlich nach dem Verfahren aus Anspruch 14.

**16.** Elastomeres Produkt, enthaltend die feuchtigkeitsgehärtete Zusammensetzung nach einem der Ansprüche 1 bis 11.

**17.** Verwendung einer Mischung und/oder des Reaktionsprodukts wie in Anspruch 11 definiert als einen Katalysator in einer feuchtigkeitshärtbaren Zusammensetzung.

**18.** Verwendung einer Zusammensetzung nach einem der Ansprüche 1 bis 13 als ein Dichtmittel.

## Revendications

**1.** Composition durcissable à l'humidité capable de durcir en un corps élastomère, la composition comprenant

a) un matériau polymère n'ayant pas moins de deux groupes hydroxyles ou hydrolysables
b) un durcisseur constitué d'un alkoxysilane et
c) un catalyseur comprenant un mélange et/ou un produit de réaction d'un composé (i) choisi parmi le $M[OR]_4$ et le $M[OR']_x[Z]_z$

dans laquelle
M représente un métal ayant une valence de 4 choisi dans le groupe IVB du tableau périodique des éléments, chaque R et R' est identique ou différent et est choisi parmi un hydrocarbure aliphatique primaire, secondaire ou tertiaire et le groupe $SiR^9_3$, où chaque $R^9$ représente un groupe alkyle ayant de 1 à 6 atomes de carbone et
Z représente un groupe répondant à la formule -O-Y-O- dans laquelle Y représente un groupe alkylène comprenant de 1 à 8 atomes de carbone ou un radical alkylène ramifié comprenant de 1 à 8 atomes de carbone et x est égal à 0 ou 2, auquel cas quand x est égal à 0, z est égal à 2 et quand x est égal à 2, z est égal à 1 ; et
d'un composé ii) répondant à la formule générale

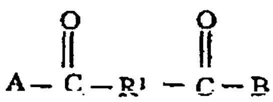

dans laquelle $R^1$ est choisi parmi un groupe méthylène ou un radical méthylène substitué ayant de 1 à 6 atomes de carbone,
A est choisi parmi le groupe $-(CX_2)_nC(R^2)_3$ dans lequel n varie de 0 à 5, et un groupe adamantyle ou un dérivé de celui-ci ;
B est choisi dans le groupe $-(CX_2)_tC(R^2)_3$ dans lequel t varie de 0 à 5 ;
un groupe alkyle monovalent ayant de 1 à 6 atomes de carbone et ; $OR^3$, dans lequel $R^3$ est choisi dans le groupe composé du groupe $-(CX_2)_tC(R^2)_3$ et d'un groupe alkyle monovalent ayant de 1 à 6 atomes de carbone ; dans lequel chaque X est identique ou différent et est choisi dans le groupe composé d'un radical halogène et d'un atome d'hydrogène, chaque $R^2$ est identique ou différent et est choisi dans le groupe composé d'un radical halogène et d'un radical alkyle ayant de un à huit atomes de carbone, et quand n est supérieur à 0 au moins l'un des groupes X ou $R^2$ représente un radical halogène.

**2.** Composition selon la revendication 1, dans laquelle le composé (ii) est choisi parmi le pivaloylacétate de méthyle et le 4,4,4-trifluoroacétoacétate d'éthyle.

**3.** Composition selon la revendication 1, dans laquelle M dans le catalyseur (c) est le titane.

**4.** Composition selon la revendication 1 ou 3, dans laquelle le catalyseur (c) comprend un ou plusieurs des composés de bis(éthyl-3-oxo-4,4-diméthylhexanoate) de di-tert-butoxytitane, bis(méthyl-3-oxo-4,4-diméthylhexanoate) de diisopropoxytitane, bis(pivaloylacétate de méthyle) de 2,3-diméthyl-2,3-dioxybutanetitane, bis(pivaloylacétate de méthyle) de 2-méthyl-2,4-dioxypentanetitane, bis(pivaloylacétate de méthyle) de 1,3-dioxypropanetitane, bis(méthyl-3-oxo-4,4-diméthylhexanoate) de 1,2-dioxyéthanetitane, bis(méthyl-3-oxo-4,4-diméthylhexanoate) de 2,3-diméthyl-2,3-dioxybutanetitane, bis(méthyl-3-oxo-4,4-diméthylhexanoate) de 2-méthyl-2,4-dioxypentanetitane, bis (éthyltrifluorométhylacétoacétate) de diisopropoxytitane, bis(éthyltrifluorométhylacétoacétate) de di-tert-butoxytitane, bis(méthylpentafluoroéthylacétoacétate) de di-tert-butoxytitane, bis(éthylpentafluoroéthylacétoacétate) de diéthoxytitane, bis(éthyltrifluorométhylacétoacétate) de 2,3-diméthyl-2,3-dioxybutanetitane, bis (éthyltrifluorométhylacétoacétate) de 2-méthyl-2,4-dioxypentanetitane, bis(méthytpentafluoroéthylacétoacétate) de 1,3-dioxypropanetitane, bis(éthylpentafluoroéthylacétoacétate) de 1,2-dioxyéthanetitane, bis(méthyltrifluorométhylacétoacétate) de 1,2-dioxyéthanetitane, bis(isopropyltrifluorométhylacétoacétate) de 1,3-dioxypropanetitane, et bis (éthylpentafluoroéthylacétoacétate) de 2-méthyl-2,4-dioxypentanetitane.

**5.** Composition selon la revendication 1, dans laquelle M dans le catalyseur (c) est le zirconium.

**6.** Composition selon la revendication 1 ou 5, dans laquelle le catalyseur (c) comprend un ou plusieurs des composés de bis(méthylpivaloyloacétate) de di(2-éthylhexoxy)zirconium, bis(méthylpivaloyloacétate) de di(n-butoxy)zirconium, bis(méthylpivaloyloacétate) de di(n-propoxy)zirconium, bis(méthyl-3-oxo-4,4-diméthylhexanoate) de di(n-butoxy)zirconium, bis(méthyl-3-oxo-4,4-diméthylhexanoate) de di(n-propoxy)zirconium, bis(éthyltrifluorométhylacétoacétate) de diisopropoxyzirconium, bis(éthyltrifluorométhylacétoacétate) de di-n-butoxyzirconium, bis(éthyltrifluorométhylacétoacétate) de di-n-propoxyzirconium, bis(éthylpentafluoroéthylacétoacétate) de di-tertiaire-butoxyzirconium, bis(éthylpentafluoroéthylacétoacétate) de diisopropoxyzirconium, bis(éthylpentafluoroéthylacétoacétate) de di-n-butoxyzirconium, bis(méthylpivaloyloacétate) de 1,2-dioxyéthanezirconium, bis(méthylpivaloyloacétate) de 1,3-dioxypropanezirconium, bis(éthylpivaloyloacétate) de 2,4-diméthyl-2,4-dioxypentanezirconium, bis (éthylpivaloyloacétate) de 2,3-diméthyl-2,3-dioxybutanezirconium, bis(éthyltrifluorométhylacétoacétate) de 1,2-dioxyéthanezirconium, bis(éthyltrifluorométhylacétoacétate) de 1,3-dioxypropanezirconium, bis(éthyltrifluorométhylacétoacétate) de 2,3-diméthyl-2,3-dioxybutanezirconium, bis(éthylpentafluoroéthylacétoacétate) de 2-méthyl-2,4-dioxypentanezirconium, tétra(éthyltrifluorométhylacétate) zirconium, bis(méthy)pivaloyloacétate) de di-tert-amyloxyzirconium, bis(éthyltrifluorométhylacétoacétate) de di-tert-butoxyzirconium, bis(éthyltrifluorométhylacétoacétate) de di-tert-amyloxyzirconium, bis(éthylpentafluoroéthylacétoacétate) de di-tert-amyloxyzirconium, bis (méthylpivaloylacétate) de diisopropoxyzirconium, bis(méthylpivaloyloacétate) de di(2-éthylhexoxy)zirconium et bis(méthylpivaloyloacétate) de di(n-butoxy)zirconium.

**7.** Composition selon l'une quelconque des revendications précédentes, dans laquelle le matériau polymère (a) n'a pas moins de deux groupes liés à un atome de silicium qui sont des groupes hydroxyles ou hydrolysables.

**8.** Composition durcissable à l'humidité selon la revendication 7, dans laquelle le matériau polymère (a) est un polydiorganosiloxane linéaire ou sensiblement linéaire ayant des groupes terminaux choisis parmi les groupes $-Si(R'')_2OH$, et $-Si(R'')_2-(D)_d-R'''-SiR''_k(OR^5)_{3-k}$, où D représente le groupe $-R'''-(Si(R'')_2-O)_r-Si(R'')_2-$, R'' est choisi parmi un groupe alkyle ayant de 1 à 6 atomes de carbone, un groupe vinyle, un groupe phényle et un groupe alkyle fluoré, R''' représente un groupe hydrocarbure divalent, r représente un nombre entier compris entre 1 et 6 et d est égal à 0 ou à un nombre entier, $R^5$ représente un groupe alkyle ou oxyalkyle dans lequel les groupes alkyles ont jusqu'à 6 atomes de carbone et k a une valeur égale à 0, 1 ou 2.

**9.** Composition selon la revendication 8, dans laquelle d est égal à 0 ou 1, R''' représente un groupe éthylène, k est égal à 0 et $R^5$ représente un groupe éthyle.

**10.** Composition selon l'une quelconque des revendications précédentes, dans laquelle l'alkoxysilane est choisi parmi les composés de méthyltriméthoxysilane, vinyltriméthoxysilane, méthyltriéthoxysilane, isobutyltriméthoxysilane et vinyltriéthoxysilane.

**11.** Composition selon l'une quelconque des revendications précédentes, dans laquelle ladite composition comprend en outre une charge finement divisée qui est principalement de la silice.

**12.** Composition constituant un catalyseur pour catalyser une réaction entre un matériau polymère n'ayant pas moins de deux groupes hydroxyles ou hydrolysables et un durcisseur constitué d'un alkoxysilane, ledit catalyseur comprenant (a) un mélange et/ou un produit de réaction d'un composé (i) choisi parmi le $M[OR]_4$ et le $M[OR']_x[Z]_z$ dans laquelle

M représente un métal ayant une valence de 4 choisi dans le groupe IVB du tableau périodique des éléments, chaque R et R' est identique ou différent et est choisi parmi un hydrocarbure aliphatique primaire, secondaire ou tertiaire et le groupe $SiR^9_3$, où chaque $R^9$ représente un groupe alkyle ayant de 1 à 6 atomes de carbone et

Z représente un groupe répondant à la formule -O-Y-O- dans laquelle Y représente un groupe alkylène comprenant de 1 à 8 atomes de carbone ou un groupe alkylène ramifié comprenant de 1 à 8 atomes de carbone et x est égal à 0 ou 2, auquel cas quand x est égal à 0, z est égal à 2 et quand x est égal à 2, z est égal à 1 ; et

d'un composé ii) répondant à la formule générale

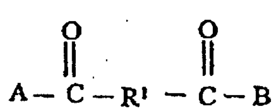

dans laquelle $R^1$ est choisi parmi un groupe méthylène ou un radical méthylène substitué ayant de 1 à 6 atomes de carbone,

A est choisi parmi le groupe $-(CX_2)_nC(R^2)_3$ dans lequel n varie de 0 à 5, et un groupe adamantyle ou un dérivé de celui-ci ;

B est choisi dans le groupe $-(CX_2)_tC(R^2)_3$ dans lequel t varie de 0 à 5 ;

un groupe alkyle monovalent ayant de 1 à 6 atomes de carbone et ; $OR^3$, dans lequel $R^3$ est choisi dans le groupe composé du groupe $-(CX_2)_tC(R^2)_3$ et d'un groupe alkyle monovalent ayant de 1 à 6 atomes de carbone ; dans lequel chaque X est identique ou différent et est choisi dans le groupe composé d'un radical halogène et d'un atome d'hydrogène, chaque $R^2$ est identique ou différent et est choisi dans le groupe composé d'un radical halogène et d'un radical alkyle ayant de un à huit atomes de carbone, et quand n est supérieur à 0 au moins l'un des groupes X ou $R^2$ représente un radical halogène ; et

(b) un alkoxysilane ou un alcool amylique tertiaire.

**13.** Catalyseur selon la revendication 12 ; dans lequel l'alkoxysilane est le méthyltriméthoxysilane.

**14.** Procédé de formation du catalyseur selon la revendication 12 ou 13, consistant à mélanger le durcisseur constitué d'un alkoxysilane ou l'alcool (amylique tertiaire) avec le composé (i) et à ajouter le composé (ii) en même temps que ou après le composé (i).

**15.** Catalyseur pouvant être obtenu par le procédé selon la revendication 14.

**16.** Produit élastomère comprenant la composition durcie à l'humidité selon l'une quelconque des revendications 1 à 11.

**17.** Utilisation d'un mélange et/ou d'un produit de réaction selon la revendication 11 comme catalyseur dans une composition durcissable à l'humidité.

**18.** Utilisation d'une composition selon l'une quelconque des revendications 1 à 13 comme produit d'étanchéité.